(19) Europäisches Patentamt
European Patent Office
Office européen des brevets

(11) EP 2 257 590 B1

(12) EUROPÄISCHE PATENTSCHRIFT

(45) Veröffentlichungstag und Bekanntmachung des Hinweises auf die Patenterteilung:
**29.04.2015 Patentblatt 2015/18**

(21) Anmeldenummer: **09726009.5**

(22) Anmeldetag: **16.03.2009**

(51) Int Cl.:
***C08K 5/098*** (2006.01) ***C08L 55/02*** (2006.01)
***C08L 69/00*** (2006.01)

(86) Internationale Anmeldenummer:
**PCT/EP2009/001896**

(87) Internationale Veröffentlichungsnummer:
**WO 2009/118114 (01.10.2009 Gazette 2009/40)**

# (54) SCHLAGZÄHMODIFIZIERTE POLYCARBONAT-ZUSAMMENSETZUNGEN MIT EINER GUTEN KOMBINATION AUS ROHTON, HYDROLYSE- UND SCHMELZESTABILITÄT

IMPACT-RESISTANT MODIFIED POLYCARBONATE COMPOSITIONS WITH A GOOD COMBINATION OF RAW TALC, HYDROLYSIS- AND MELT STABILITY

COMPOSITIONS DE POLYCARBONATE À RÉSILIENCE MODIFIÉE PRÉSENTANT UNE BONNE COMBINAISON D'ARGILE BRUTE ET DE STABILITÉ À L'HYDROLYSE ET À LA FUSION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **22.03.2008 DE 102008015407**

(43) Veröffentlichungstag der Anmeldung:
**08.12.2010 Patentblatt 2010/49**

(73) Patentinhaber: **Bayer Intellectual Property GmbH**
**40789 Monheim (DE)**

(72) Erfinder:
- **AVTOMONOV, Evgeny**
  **51373 Leverksen (DE)**
- **SEIDEL, Andreas**
  **41542 Dormagen (DE)**
- **ECKEL, Thomas**
  **41540 Dormagen (DE)**
- **EICHENAUER, Herbert**
  **41539 Dormagen (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
**WO-A-2008/138534**
**DE-A1-102005 058 847**
**JP-A- 2006 169 461**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 257 590 B1

Printed by Jouve, 75001 PARIS (FR)

## Beschreibung

Die vorliegende Erfindung betrifft Polycarbonat-Zusammensetzungen enthaltend spezielle, durch das Verfahren der Emulsionspolymerisation hergestellte kautschukhaltige Pfropfpolymerisate als Schlagzähmodifikator, sowie ein Verfahren zur Herstellung dieser Polycarbonat-Zusammensetzungen und die Verwendung der Polycarbonat-Zusammensetzungen zur Herstellung von Formkörpern und die Formkörper selbst.

Polycarbonat-Zusammensetzungen enthaltend Pfropfpolymerisate als Schlagzähmodifikatoren können abhängig von der Reinheit und Additivierung des Zähmodifikators, z.B. ABS (AcrylnitrilButadien-Styrol-Terpolymer) unterschiedliche Stabilität gegenüber Hydrolyse und thermische Belastung aufweisen. So werden von B.S. Patty, L. Novak und H. Phan (in "Thermal and hydrolytic stability of polycarbonate/acrylonitrile-butadiene-styrene based blends", Society of Automotive Engineers, [Special Publication] SP (2005), SP-1960 (Advances in Plastic Components, Processes and Technologies), 145-151) Polycarbonat-Zusammensetzungen beschrieben, die für Masse-ABS als Modifikator eine deutlich bessere Hydrolysestabilität und thermische Stabilität aufweisen als im Falle von Emulsions-ABS als Modifikator. Dabei wird das unterschiedliche Verhalten der Polycarbonat/Masse-ABS-Zusammensetzungen gegenüber Polycarbonat/Emulsions-ABS-Zusammensetzungen darauf zurückgeführt, dass das Herstellverfahren für Emulsions-ABS gegenüber Masse-ABS eine höhere Anzahl an verschiedenen Chemikalien als Hilfsmittel benötigt, wie z.B. Emulgatoren, Fließverbesserer, Stabilisatoren, Salze etc., wobei unter diesen Chemikalien auch solche enthalten sind, die zur Zersetzung des Polycarbonats führen können. Ein weiterer Vorteil der Polycarbonat/Masse-ABS-Zusammensetzungen ist eine besonders helle Eigenfarbe (Rohton), die sich auf die Einfärbung der Formkörper bestehend aus solchen Zusammensetzungen besonders günstig auswirkt. Jedoch weisen Zusammensetzungen enthaltend Masse-ABS als Schlagzähmodifikator häufig größere Veränderungen der Schmelzeviskosität bei hohen Temperaturen auf (z.B. bei 280-300°C), die mit einer verschlechterten Verarbeitungsstabilität einhergehen.

Bestimmte Polycarbonat-Zusammensetzungen enthaltend Emulsions-Pfropfpolymerisate als Schlagzähmodifikator weisen gegenüber Polycarbonat-Zusammensetzungen enthaltend Masse-ABS einige technische Vorteile auf, z.B. hinsichtlich der Oberflächenbeschaffenheit (Glanzgrad), so dass es für einige Anwendungen vorteilhaft ist, Emulsions-Pfropfpolymerisate einzusetzen. Ist eine hohe Hydrolysestabilität und thermische Stabilität gefordert, so muss man hohe Anforderungen an die eingesetzten Emulsions-Pfropfpolymerisate stellen, wie z.B. hinsichtlich deren Reinheit, des Aufarbeitungsverfahrens bei deren Herstellung und eines Verzichts auf bestimmte Hilfsmittel bei deren Herstellung.

Beispielsweise sind aus EP-A 0 900 827 schlagzähmodifizierte Polycarbonat-Zusammensetzungen mit verbesserter Thermostabilität enthaltend Emulsions-Pfropfpolymerisate bekannt, welche im Wesentlichen frei von Komponenten sind, die das Polycarbonat abbauen. Um ein Emulsions-Pfropfpolymerisat im Wesentlichen frei von Komponenten zu erhalten, die das Polycarbonat abbauen, muss man auf solche Komponenten im Emulsionsverfahren in jeder Verfahrensstufe völlig verzichten oder die hergestellten Emulsions-Pfropfpolymerisate durch ein entsprechendes Aufarbeitungsverfahren von diesen Komponenten komplett befreien, z.B. durch das Waschen nach der Koagulation der Pfropfdispersion. Insbesondere muss man auf die Verwendung von carboxylat-haltigen Hilfsstoffen (z.B. Emulgatoren, Pufferlösungen etc.) verzichten, da diese Polycarbonat abbauen. Die aus EP-A 0 900 827 bekannten Polycarbonat-Zusammensetzungen enthalten Emulsions-Pfropfpolymerisate des MBS und ABS-Typs, die unter Verwendung von Sulfat- und/oder Sulfonat-haltigen Emulgatoren hergestellt wurden. Diese Emulgatoren führen häufig zu unerwünschten Verfärbungen der Formmassen.

Aus der WO-A 99/01489 sind Emulsions-Pfropfpolymerisate vom ABS-Typ bekannt, welche mittels verschiedenster Emulgatoren hergestellt werden. Unter anderem werden für deren Herstellung gängige carboxylat-haltige Emulgatoren als mögliche Emulgatoren erwähnt. Diese Patentschrift lehrt auch, wie man besonders helle ABS-Formmassen herstellen kann, bei denen die Verarbeitung und der Acrylnitrilgehalt im Pfropfpolymerisat und in der Matrixkomponente (SAN-Harz) eine besonders wichtige Rolle spielen. Aus WO-A 99/01489 geht es vor allem hervor, dass die Zusammensetzungen enthaltend Emulsions-ABS sich besonders zur Vergilbung bis hin zur Verbräunung neigen. Diese Vergilbung bzw. Verbräunung zeichnen sich durch den Gelbindex (Yellowness Index) von grösser 30 bis weit über 50 aus. Dabei hängt der Yellowness Index von mehreren Faktoren ab, u.a. vom Kautschuk- und Acrylnitrilgehalt des ABS, von den Additiven in der Emulsionspolymerisation und bei der Aufarbeitung und ggf. von der Reinigung des Pfropfpolymerisats sowie von den Verarbeitungsbedingungen der Formmassen und Bedingungen bei der Herstellung von Formkörpern. Die Vergilbung bzw. Braunfärbung wird durch die hohen Temperaturen begünstigt, wie sie z.B. bei der Spritzgussverarbeitung oder bei der Abmischung mit Zusatzstoffen während Compoundierung auf einem Extruder auftreten.

In einer technischen Broschüre der Fa. DSM (veröffentlicht auf der Internetseite: www.dsm.com/en_US/downloads/dep/Xantar_brochure_01.pdf) werden Polycarbonat/ABS-Zusammensetzungen beschrieben, die folgende verbesserte Eigenschaften aufweisen, wie z.B. eine hohe Fliessfähigkeit kombiniert mit einer hohen Zähigkeit, eine verbesserte Verarbeitbarkeit kombiniert mit einem reduzierten Werkzeugbelag beim Spritzgießen, verbesserte Oberflächenqualität, stabilerer Oberflächenglanz und etwa ein hellerer, als bei herkömmlichen Polycarbonat/-ABS-Zusammensetzungen Rohton. In derselben Broschüre wird darauf hingewiesen, dass bei diesen verbesserten Polycarbonat/ABS-Zusammensetzungen ein speziell entwickeltes hochreines ABS eingesetzt wird.

JP 2006 169461 offenbart hydrolysebeständige und verarbeitungsstabile Zusammensetzungen enthaltend ein Polycarbonat, ein durch Emulsionspolymerisation hergestelltes ABS enthaltend ein Fettsäuresalz und weitere Zusatzstoffe. JP 2006 169461 lehrt, dass die in der Pfropfreaktion eingesetzten Emulgatoren bei einem Verbleib in der Zusammensetzung die physikalischen Eigenschaften deutlich beeinträchtigen und deshalb ein Restgehalt von größer 0.3 Gew.-% Emulgator vermieden werden soll.

DE 10 2005 058 847 A1 offenbart schlagzähmodifizierte thermoplastische Polycarbonat-Zusammensetzungen zur Herstellung komplexer Formteile, die sich durch eine verbesserte Verarbeitungsstabilität sowie eine gute Hydrolysebeständigkeit und einen hellen Rohton auszeichnen. Es wird beschrieben, dass Hilfsstoffe aus der Emulsionspolymerisation oder den Aufarbeitungsprozessen durch Säuren wie etwa Zitronensäure neutralisiert werden sollen.

Aufgabe der vorliegenden Erfindung ist die Bereitstellung von schlagzähmodifizierten Polycarbonat-Formmassen enthaltend mindestens ein Emulsions-Pfropfpolymerisat als Schlagzähmodifikator, welche sich durch eine Kombination aus einem hellen Rohton, einer hohen Hydrolysebeständigkeit und einer hervorragenden Verarbeitungsstabilität auszeichnen, und zusätzlich die Bedingung erfüllen, dass diese schlagzähmodifizierten Polycarbonat-Formmassen ein Emulsions-Pfropfpolymerisat enthalten, welches in einem effizienten und für die Umwelt vorteilhaften Herstellverfahren hergestellt wird.

Es wurde nun überraschend gefunden, dass Zusammensetzungen enthaltend

A) 10 bis 99 Gew.-Teile, bevorzugt 40 bis 95 Gew.-Teile, besonders bevorzugt 50 bis 73 Gew.-Teile, jeweils bezogen auf die Summe der Komponenten A+B+C, aromatisches Polycarbonat und/oder aromatisches Polyestercarbonat,
B) 1 bis 35 Gew.-Teile, bevorzugt 4 bis 30 Gew.-Teile, besonders bevorzugt 12 bis 20 Gew.-Teile, jeweils bezogen auf die Summe der Komponenten A+B+C, kautschukmodifiziertes Pfropfpolymerisat von

B.1 5 bis 95 Gew.-%, vorzugsweise 30 bis 90 Gew.-%, wenigstens eines Vinylmonomeren auf
B.2 95 bis 5 Gew.-%, vorzugsweise 70 bis 10 Gew.-% einer oder mehrerer Pfropfgrundlagen mit einer Glasübergangstemperatur < 10°C, vorzugsweise < 0°C, besonders bevorzugt < -20°C,

C) 0 bis 40 Gew.-Teile, bevorzugt 1 bis 30 Gew.-Teile, besonders bevorzugt 15 bis 25 Gew.-Teile, jeweils bezogen auf die Summe der Komponenten A+B+C, harzartiges, thermoplastisches und kautschukfreies Vinyl(Co)Polymerisat und/oder Polyalkylenterephthalat,
D) 0 bis 50 Gew.-Teile, bevorzugt 1 bis 40 Gew.-Teile, besonders bevorzugt 2 bis 30 Gew.-Teile, jeweils bezogen auf die Summe der Komponenten A+B+C, phosphorhaltiges Flammschutzmittel,
E) 0 bis 1,0 Gew.-Teile, bevorzugt 0,01 bis 1,0 Gew.-Teile, besonders bevorzugt 0,02 bis 0,5 Gew.-Teile, jeweils bezogen auf die Summe der Komponenten A+B +C, saure Additive und
F) 0 bis 50 Gew.-Teile, bevorzugt 0,5 bis 25 Gew.-Teile, jeweils bezogen auf die Summe der Komponenten A+B +C, Zusatzstoffe,

wobei Komponente B erhältlich ist durch Reaktion der Komponente B.1 mit der Pfropfgrundlage B.2 mittels Emulsionspolymerisation **mit der Maßgabe, dass** bei Zusammensetzungen, die frei sind von den Komponenten D) und E), die Pfropfpolymerisat-Dispersion bei der Fällung einen pH-Wert von kleiner als 7 aufweist,
**dadurch gekennzeichnet, dass** in der Pfropfreaktion 0,1 bis 5 Gew.-Teile, bevorzugt 0,3 bis 2,5 Gew.-Teile, insbesondere 0,5 bis 2,5 Gew.-Teile, besonders bevorzugt 1,0 bis 2,5 Gew.-Teile, ganz besonders bevorzugt 1,5 bis 2,5 Gew.-Teile (bezogen auf die Summe der Gewichtsteile der eingesetzten Monomere B.1 und der Pfropfgrundlage B.2 = 100 Gew.-Tle.) mindestens eines Emulgators ausgewählt aus der Gruppe der Alkalimetallsalze der Caprinsäure ($C_9H_{19}COOH$), Laurinsäure ($C_{11}H_{23}COOH$), Myristinsäure ($C_{13}H_{27}COOH$), Palmitinsäure ($C_{15}H_{31}COOH$), Margarinsäure ($C_{16}H_{33}COOH$), Stearinsäure ($C_{17}H_{35}COOH$), Arachinsäure ($C_{19}H_{39}COOH$), Behensäure ($C_{21}H_{43}COOH$), Lignocerinsäure ($C_{23}H_{47}COOH$) oder Cerotinsäure ($C_{25}H_{51}COOH$) eingesetzt wird, und das Pfropfpolymerisat aus der Dispersion durch Zugabe von Magnesiumsulfat gefällt wird,
, wobei der Emulgator bzw. die Emulgatoren sowie Magnesiumsulfat in der Komponente B verbleibt bzw. verbleiben, und wobei alle Gewichtsteilangaben in der vorliegenden Anmeldung so normiert sind, dass die

Summe der Gewichtsteile aller Komponenten A+B+C in der Zusammensetzung 100 ergeben, das gewünschte Eigenschaftsprofil aufweisen.

Die oben beschriebenen erfindungsgemäßen Formmassen unterscheiden sich vom Stand der Technik somit insbesondere darin, dass bei der Herstellung der Komponente B auf den Schritt der Reinigung des Emulsions-Pfropfpolymerisats (z.B. durch das Waschen des koagulierten Pfropfpolymerisats mit einer bis zu 100-fachen Menge Wasser) verzichtet werden kann, so dass das Herstellverfahren des Emulsions-Pfropfpolymerisats (Komponente B) effizient und für die Umwelt vorteilhaft ist. Es wurde überraschend festgestellt, dass trotz des Verbleibs des Emulgators im resultierenden Pfropfpolymerisat die dieses Pfropfpolymerisat enthaltenden erfindungsgemäßen schlagzähmodifizierten Polycarbonat-Zusammensetzungen einen guten Rohton, eine hohe Hydrolysebeständigkeit und eine hervorragende Verarbeitungsstabilität aufweisen.

Somit wurde durch die vorliegende Erfindung das technische Vorurteil des oben zitierten Standes der Technik überwunden, dass zur Herstellung von schlagzähmodifizierten Polycarbonat-Formmassen mit verbesserten Eigenschaften hochreine Schlagzähmodifikatoren eingesetzt werden müssen und dass insbesondere darauf zu achten sei, dass die Zusammensetzungen frei sind von Carboxylat-haltigen Hilfsstoffen.

Gegenstand der vorliegenden Erfindung ist auch ein Verfahren zur Herstellung von schlagzähmodifizierten Polycarbonat-Formmassen mit verbessertem Rohtons unter Beibehaltung der guten Hydrolysebeständigkeit und Verarbeitungsstabilität der schlagzähmodifizierten Polycarbonat-Formmassen, wobei die Bestandteile

A) 10 bis 99 Gew.-Teile, bevorzugt 40 bis 95 Gew.-Teile, besonders bevorzugt 50 bis 73 Gew.-Teile aromatisches Polycarbonat und/oder aromatisches Polyestercarbonat,
B) 1 bis 35 Gew.-Teile, bevorzugt 4 bis 30 Gew.-Teile, besonders bevorzugt 12 bis 20 Gew.-Teile kautschukmodifiziertes Pfropfpolymerisat von

B.1 5 bis 95, vorzugsweise 30 bis 90 Gew.-%, wenigstens eines Vinylmonomeren auf
B.2 95 bis 5, vorzugsweise 70 bis 10 Gew.-% einer oder mehrerer Pfropfgrundlagen mit einer Glasübergangstemperatur < 10°C, vorzugsweise < 0°C, besonders bevorzugt < -20°C,

C) 0 bis 40 Gew.-Teile, bevorzugt 1 bis 30 Gew.-Teile, besonders bevorzugt 15 bis 25 Gew.-Teile harzartiges, thermoplastisches und kautschukfreies Vinyl(Co)Polymerisat und/oder Polyalkylenterephthalat,
D) 0 bis 50 Gew.-Teile, bevorzugt 1 bis 40 Gew.-Teile, besonders bevorzugt 2 bis 30 Gew.-Teile, jeweils bezogen auf die Summe der Komponenten A+B+C, phosphorhaltiges Flammschutzmittel,
E) 0 bis 1,0 Gew.-Teile, bevorzugt 0,01 bis 1,0 Gew.-Teile, besonders bevorzugt 0,02 bis 0,5 Gew.-Teile, jeweils bezogen auf die Summe der Komponenten A+B+C, saure Additive und
F) 0 bis 50 Gew.-Teile, bevorzugt 0,5 bis 25 Gew.-Teile, jeweils bezogen auf die Summe der Komponenten A+B+C, Zusatzstoffe,

in bekannter Weise vermischt (sukzessive als auch simultan erfolgen, und zwar sowohl bei etwa 20°C (Raumtemperatur) als auch bei höherer Temperatur) und bei Temperaturen von 260°C bis 300°C in üblichen Aggregaten wie Innenknetern, Extrudern und Doppelwellenschnecken schmelzcompoundiert und schmelzextrudiert werden,
**dadurch gekennzeichnet, dass** als Schlagzähmodifikator kautschukmodifiziertes Pfropfpolymerisat (Komponente B) eingesetzt wird, welches durch Reaktion der Komponente B.1 mit der Pfropfgrundlage B.2 mittels Emulsionspolymerisation hergestellt wird, wobei

(i) im ersten Schritt die Kautschukgrundlage B.2 mittels radikalischer EmulsionsPolymerisation direkt als wässrige Dispersion hergestellt oder im Wasser dispergiert wird,
(ii) im zweiten Schritt die Reaktion der Komponente B.1 mit der Pfropfgrundlage B.2 (nachfolgend als "Pfropfreaktion" bezeichnet) mittels Emulsionspolymerisation erfolgt, wobei

1) die Komponente B.2 in Wasser dispergiert,
2) 0,1 bis 5 Gew.-Teile, bevorzugt 0,3 bis 2,5 Gew.-Teile, insbesondere 0,5 bis 2,5 Gew.-Teile, besonders bevorzugt 1,0 bis 2,5 Gew.-Teile, ganz besonders bevorzugt 1,5 bis 2,5 Gew.-Teile (bezogen auf die Summe der Gewichtsteile der bei der Herstellung des Pfropfpolymerisats B eingesetzten Monomere B.1 und der Pfropfgrundlage B.2 = 100 Gew.-Tle.) mindestens eines Emulgators ausgewählt aus der Gruppe der Alkalimetallsalze der Caprinsäure ($C_9H_{19}COOH$), Laurinsäure ($C_{11}H_{23}COOH$), Myristinsäure ($C_{13}H_{27}COOH$), Palmitinsäure ($C_{15}H_{31}COOH$), Margarinsäure ($C_{16}H_{33}COOH$), Stearinsäure ($C_{17}H_{35}COOH$), Arachinsäure ($C_{19}H_{39}COOH$), Behensäure ($C_{21}H_{43}COOH$), Lignocerinsäure ($C_{23}H_{47}COOH$) oder Cerotinsäure ($C_{25}H_{51}COOH$) eingesetzt wird, sowie die Monomere gemäß Komponente B.1 und Radikalbildner, sowie gegebenenfalls Molekulargewichtsregler der aus Schritt (1) resultierenden Kautschukgrundlagen-Dispersion zugesetzt werden,
3) die Aufarbeitung mittels eines Verfahrens bestehend aus den Schritten

3.1) Fällung mit Magnesiumsulfat und
3.2) Abtrennung des Dispersionswassers erfolgt,

**mit der Maßgabe, dass** bei Zusammensetzungen, die frei sind von den Komponenten D) und E), die Pfropfpolymerisat-Dispersion bei der Fällung (3.1) einen pH-Wert von kleiner als 7 aufweist,
**dadurch gekennzeichnet, dass** das resultierende wasserfeuchte Pfropfpolymerisat nicht mit zusätzlichem Wasser gewaschen wird, wobei der Emulgator bzw. die Emulgatoren sowie Magnesiumsulfat in der Komponente

B verbleiben

und wobei alle Gewichtsteilangaben in der vorliegenden Anmeldung so normiert sind, dass die Summe der Gewichtsteile aller Komponenten A+B+C in der Zusammensetzung 100 ergeben.

**Komponente A**

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

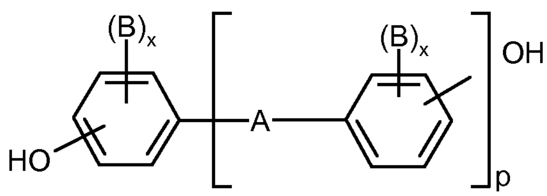

(I),

wobei

A eine Einfachbindung, $C_1$ bis $C_5$-Alkylen, $C_2$ bis $C_5$-Alkyliden, $C_5$ bis $C_6$-Cycloalkyliden,-O-, -SO-, -CO-, -S-, $-SO_2-$, $C_6$ bis $C_{12}$-Arylen, an das weitere aromatische gegebenenfalls Heteroatome enthaltende Ringe kondensiert sein können,
oder ein Rest der Formel (II) oder (III)

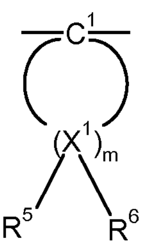

(II)

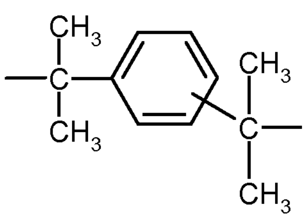

(III)

B jeweils $C_1$ bis $C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^5$ und $R^6$ für jedes $X^1$ individuell wählbar, unabhängig voneinander Wasserstoff oder $C_1$ bis $C_6$-Alkyl, vorzugsweise

Wasserstoff, Methyl oder Ethyl,

$X^1$ Kohlenstoff und

m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxy-phenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di-und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethyl-butyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-%mol-%, und 10 mol-%mol-%, bezogen auf die Molsumme der jeweils eingesetzten Diphenole.

Die thermoplastischen, aromatischen Polycarbonate haben mittlere Gewichtsmittelmolekulargewichte ($M_w$, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 mol-%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 mol-% (bezogen auf eingesetzte

Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

## Komponente B

Die Komponente B umfasst ein oder mehrere Pfropfpolymerisate von

- B.1 5 bis 95, vorzugsweise 30 bis 90 Gew.-%, wenigstens eines Vinylmonomeren auf
- B.2 95 bis 5, vorzugsweise 70 bis 10 Gew.-% einer oder mehrerer Pfropfgrundlagen mit einer Glasübergangstemperatur < 10°C, vorzugsweise < 0°C, besonders bevorzugt < - 20°C,

dadurch gekennzeichnet, dass die Reaktion der Komponente B.1 (im folgenden auch als Pfropfauflage bezeichnet) mit der Pfropfgrundlage B.2 mittels Emulsionspolymerisation erfolgt ("Pfropfreaktion"), wobei ein Emulgator ausgewählt aus der Gruppe der Alkalimetallsalze der Caprinsäure ($C_9H_{19}COOH$), Laurinsäure ($C_{11}H_{23}COOH$), Myristinsäure ($C_{13}H_{27}COOH$), Palmitinsäure ($C_{15}H_{31}COOH$), Margarinsäure ($C_{16}H_{33}COOH$), Stearinsäure ($C_{17}H_{35}COOH$), Arachinsäure ($C_{19}H_{39}COOH$), Behensäure ($C_{21}H_{43}COOH$), Lignocerinsäure ($C_{23}H_{47}COOH$) oder Cerotinsäure ($C_{25}H_{51}COOH$) eingesetzt wird

Die Pfropfgrundlage B.2 hat im allgemeinen eine mittlere Teilchengröße ($d_{50}$-Wert) von 0,05 bis 10 $\mu$m, vorzugsweise 0,1 bis 5 $\mu$m, besonders bevorzugt 0,2 bis 0,8 $\mu$m

Monomere B.1 sind vorzugsweise Gemische aus

- B.1.1 50 bis 99 Gew.-Teilen Vinylaromaten und/oder kernsubstituierten Vinylaromaten (wie Styrol, $\alpha$-Methylstyrol, p-Methylstyrol, p-Chlorstyrol) und/oder (Meth)Acrylsäure-($C_1$-$C_8$)-Alkylester, (wie Methylmethacrylat, Ethylmethacrylat), und
- B.1.2 1 bis 50 Gew.-Teilen Vinylcyanide (ungesättigte Nitrile wie Acrylnitril und Methacrylnitril) und/oder (Meth)Acrylsäure-($C_1$-$C_8$)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-PhenylMaleinimid.

Bevorzugte Monomere B.1.1 sind ausgewählt aus mindestens einem der Monomere Styrol, $\alpha$-Methylstyrol und Methylmethacrylat, bevorzugte Monomere B.1.2 sind ausgewählt aus mindestens einem der Monomere Acrylnitril, Maleinsäureanhydrid und Methylmethacrylat. Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb < 10°C, vorzugsweise < 0°C, besonders bevorzugt < -10°C liegt. Besonders bevorzugt ist reiner Polybutadienkautschuk.

Der Gelanteil der Pfropfgrundlage B.2 beträgt mindestens 30 Gew.-%, vorzugsweise mindestens 40 Gew.-% (in Toluol bei 25°C gemessen).

Die Pfropfgrundlage B.2 wird durch Polymerisation, z.B. durch Emulsions-, Suspensions-, Lösungs- oder Massepolymerisation, vorzugsweise durch Emulsionspolymerisation hergestellt.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören $C_1$ bis $C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldi(meth)acrylat, Trimethylolpropantri(meth)acrylat, Allyl(meth)acrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allyl(meth)acrylat, Ethylenglykoldi(meth)acrylat, Trimethylolpropantri(meth)acrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Trivinylbenzole. Die vernetzenden Monomere können einzeln, aber auch in Gemischen eingesetzt werden. Die Menge der vernetzenden Monomere beträgt vorzugsweise 0,02 bis 5, insbesondere 0,05 bis 2 Gew.-%, bezogen auf die Pfropfgrundlage B.2. Bei cyclischen vernetzenden Monomeren mit mindestens drei ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, $\alpha$-Methylstyrol, (Meth)acrylamide, Vinyl-$C_1$-$C_6$-alkylether, Methylmethacrylat, Butadien. Bevorzugte Acrylatkautschuke als Pfropfgrundlage B.2 sind Emulsionspolymerisate, die einen Gelgehalt von mindestens 40 Gew.-% (gemessen in Toluol bei 25°C) aufweisen.

Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.2 wird bei 25°C in einem geeigneten Lösungsmittel (z.B. Toluol) bestimmt (M. Hoffmann, H. Krömer, R. Kuhn, Polymeranalytik I und II, Georg Thieme-Verlag, Stuttgart 1977).

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid. Z. und Z. Polymere 250 (1972), 782-796) bestimmt werden.

Komponente B ist nach folgendem Verfahren erhältlich:

1. Schritt. Herstellung der Kautschukgrundlage B.2

Dem Fachmann ist aus dem Stand der Technik bekannt, dass die Pfropfgrundlage B.2 nach dem Verfahren der Emulsionspolymerisation hergestellt werden kann. Üblicherweise polymerisiert man dabei bei 20°C bis 100°C, bevorzugt bei 30°C bis 80 °C. In der Regel werden übliche anionische Emulgatoren verwendet, beispielsweise Alkalimetallsalze von Alkyl- oder Alkylarylsulfonsäuren, Alkylsulfate, Fettalkoholsulfonate, Salze höherer Carbonsäuren mit 10 bis 50 Kohlenstoffatomen, Sulfosuccinate, Ethersulfonate oder Harzseifen. Üblicherweise nimmt man die Alkalimetallsalze, insbesondere die Na- und K-Salze, von Alkylsulfaten, Alkylsulfonaten, Sulfosuccinaten, Fettsäuren oder Carbonsäuren mit 10 bis 30 Kohlenstoffatomen

Bei der vorliegenden Erfindung hängt die Wahl des Emulgators für die Herstellung der Kautschukgrundlage (Komponente B.2) von den dem Fachmann bekannten Kriterien ab, wie z.B. die Latexscherstabilität und die Beschaffenheit der Latexteilchen, Teilchengröße, Teilchengrößenverteilung, Viskosität, Restmonomergehalt, Gelgehalt, und ist somit im Gegensatz zu der Lehre von EP-A 0 900 827 nicht von dem Ausschluss von Komponenten abhängig, die das Polycarbonat zersetzen. Gemäß der vorliegenden Erfindung werden zur Herstellung der Komponente B.2 ionische Emulgatoren, bevorzugt Alkalimetallsalze von Alkyl- oder Alkylarylsulfonsäuren, Alkylsulfate, Fettalkoholsulfonate, Salze höherer Carbonsäuren mit 10 bis 50 Kohlenstoffatomen, Sulfosuccinate, Ethersulfonate oder Harzseifen, besonders bevorzugt Alkalimetall-Salze von Harzsäuren, Alkalimetallsalze höherer Fettsäuren mit 10 bis 30 Kohlenstoffatomen, Alkalimetall-Salze spezieller Dicarbonsäuren (wie z.B. in DE 3 639 904 A1 beschrieben), oder Mischungen aus ionischen und nichtionischen Emulgatoren auf die dem Fachmann bekannte Weise eingesetzt. In

der Regel werden 0,1 bis 10 Gew.-Teile, bevorzugt 0,2 bis 5 Gew.-Teile, besonders bevorzugt 0,3 bis 2,5 Gew.-Teile Emulgator bezogen auf die Summe der Gewichtsteile der für die Herstellung der Kautschukgrundlage eingesetzten Monomere eingesetzt.

2. Schritt: Pfropfreaktion zur Herstellung der Komponente B aus den Komponenten B.1 und B.2 Für die Herstellung des für die erfindungsgemäßen Polycarbonat-Zusammensetzungen eingesetzten Emulsions-Pfropfpolymerisats B ist in der Pfropfreaktion die Wahl des Emulgators entscheidend. Es wurde überraschenderweise gefunden, dass in der Pfropfreaktion nicht alle üblichen Emulgatoren verwendet werden können, wie sie z.B. in WO 99/01489 A1 bei der Herstellung von Pfropfpolymerisaten für besonders helle ABS-Formmassen beschrieben werden. Um die erfindungsgemäße Aufgabe zu lösen, ist in der Pfropfreaktion nur mindestens ein Emulgator der Alkalimetallsalze der Caprinsäure ($C_9H_{19}COOH$), Laurinsäure ($C_{11}H_{23}COOH$), Myristinsäure ($C_{13}H_{27}COOH$), Palmitinsäure ($C_{15}H_{31}COOH$), Margarinsäure ($C_{16}H_{33}COOH$), Stearinsäure ($C_{17}H_{35}COOH$), Arachinsäure ($C_{19}H_{39}COOH$), Behensäure ($C_{21}H_{43}COOH$), Lignocerinsäure ($C_{23}H_{47}COOH$) oder Cerotinsäure ($C_{25}H_{51}COOH$) einzusetzen. Natürlich können diese Emulgatoren von vornherein bei der Herstellung der Pfropfgrundlage (siehe oben 1. Schritt) eingesetzt werden, sodass auf ihre Zugabe auf der Pfropfpolymerisationsstufe gegebenenfalls verzichtet werden kann.

Die genannten Emulgatoren können auch als Mischung eingesetzt werden. In einer höchst bevorzugten Ausführungsform werden bei der Pfropfreaktion Natrium- oder Kaliumsalze von gesättigten Monocarbonfettsäuren von 12 bis 18 Kohlenstoffatomen eingesetzt, vorzugsweise $C_{17}H_{35}COONa$ oder $C_{17}H_{35}COOK$.

Die genannten Emulgatoren können sowohl einzeln, aber auch als Gemische untereinander, sowie in Kombination mit anderen, dem Fachmann bekannten nicht-ionischen Emulgatoren zwecks besserer Stabilisierung der Dispersion eingesetzt werden.

Die Emulgatoren für die Pfropfreaktion werden in den Mengen von 0,1 bis 5 Gew.-Teile, bevorzugt von 0,3 bis 2,5 Gew.-Teile, insbesondere 0,5 bis 2,5 Gew.-Teile, besonders bevorzugt 1,0 bis 2,5 Gew.-Teile, ganz besonders bevorzugt von 1,5 bis 2,5 Gew.-Teile bezogen auf die Summe der Gewichtsteile der bei der Herstellung des Pfropfpolymerisats B eingesetzten Monomere B.1 und der Pfropfgrundlage B.2 eingesetzt.

Als Radikalbildner (im folgenden auch als Polymerisationsinitiatoren bezeichnet) zum Starten der Polymerisationsreaktion sind alle Radikalbildner geeignet, die bei der gewählten Reaktionstemperatur zerfallen, d.h. sowohl solche, die allein thermisch zerfallen, wie auch solche, die dies in Gegenwart eines Redox-Systems tun. Beispielsweise und bevorzugt werden als Radikalbildner Peroxide, bevorzugt Peroxosulfate (etwa Natrium oder Kaliumperoxodisulfat) oder Redox-Systeme, insbesondere solche auf Basis von Hydroperoxiden wie Cumolhydroperoxid oder tert-Butylhydroperoxyd, eingesetzt. In der Regel werden die Polymerisationsinitiatoren in einer Menge von 0,05 bis 1 Gew.-%, bezogen auf die Pfropfauflage-Monomeren (B.1), eingesetzt.

Ferner können Molekulargewichtsregler wie z. B. Ethylhexylthioglycolat, n- oder t-Dodecylmercaptan und/oder andere Mercaptane, Terpinole und/oder dimeres $\alpha$-Methylstyrol und/oder andere, zur Regelung des Molekulargewichts geeigneten Verbindungen, eingesetzt werden.

Im ersten Schritt der Pfropfreaktion wird Komponente B.2 in Wasser dispergiert, sofern die Komponente B2 nicht als wässrige Dispersion nach der Herstellung vorliegt, oder mit Wasser verdünnt. Vorzugsweise verwendet man zur Herstellung der Pfropfpolymerisat-Dispersion soviel Wasser, dass die resultierende Dispersion nach der beendeten Pfropfreaktion einen Feststoffgehalt von 20 bis 50 Gew.-% hat.

Im zweiten Schritt werden die Radikalbildner, Emulgatoren sowie gegebenenfalls Molekulargewichtsregler der Pfropfpolymerisat-Dispersion zugesetzt. Die Zugabe dieser Hilfsstoffe (d.h. Radikalbildner, Emugatoren und Molekulargewichtsregler) kann diskontinuierlich als Gesamtmenge zu Beginn der Reaktion, oder aufgeteilt in mehrere Portionen portionsweise zu Beginn und zu einem oder mehreren späteren Zeitpunkten zugefügt, oder kontinuierlich während eines bestimmten Zeitintervalls zugefügt. Die kontinuierliche Zugabe der Hilfsstoffe kann (in Abhängigkeit von der Zeit) auch entlang eines Gradienten erfolgen, der z. B. auf- oder absteigend, linear oder exponentiell, oder auch stufenweise sein kann.

Falls Molekulargewichtsregler bei der Polymerisation verwendet werden, so können sie bei der Herstellung der Pfropfgrundlage B.2 oder bei der Herstellung der Pfropfauflage B.1 oder sowohl bei der Herstellung von Pfropfgrundlage B.2 und der Pfropfauflage B.1 in der zuvor beschriebenen Weise zugefügt werden, z.B. diskontinuierlich als Gesamtmenge zu Beginn der Reaktion, oder aufgeteilt in mehrere Portionen portionsweise zu Beginn und zu einem oder mehreren späteren Zeitpunkten zugefügt, oder kontinuierlich während eines bestimmten Zeitintervalls. Die kontinuierliche Zugabe der Hilfsstoffe kann auch entlang eines Gradienten erfolgen, der z. B. auf- oder absteigend, linear oder exponentiell, oder auch stufenweise sein kann.

Zur Einhaltung eines konstant bleibenden pH-Wertes, der vorzugsweise bei 3 bis 11 liegt, kann man Puffersubstanzen wie $Na_2HPO_4/NaH_2PO_4$, Natriumhydrogencarbonat oder einfach Säuren, wie z.B. Essigsäure, Zitronensäuren oder Laugen, wie z.B. NaOH, KOH, mitverwenden.

3. Schritt: Aufarbeitung

Die Aufarbeitung erfolgt mittels Fällung und Abtrennung des Dispersionswassers.

Die Aufarbeitung der aus dem Schritt der Pfropfreaktion resultierenden Dispersion des Emulsions-Pfropfpolymerisats B erfolgt in einem dem Fachmann bekannten Verfahren, ohne dass darauf besondere Anforderungen an die Reinheit des aufgearbeiteten Pfropfpolymerisats gestellt werden.

3.1) Fällung

Das Pfropfpolymerisat B wird zum Beispiel zunächst aus der Dispersion ausgefällt, durch Zugabe von einer fällend wirkenden Salzlösung enthaltend Magnesiumsulfat(In einer bevorzugten Form wird das Pfropfpolymerisat B aus der Dispersion durch Zugabe von Magnesiumsulfat-Essigsäure-Lösung als fällend wirkendes Mittel eingesetzt.

3.2) Abtrennung des Dispersionswassers

Die resultierende wässrige Phase wird in üblicher Weise, beispielsweise durch Sieben, Filtrieren, Dekantieren oder Zentrifugieren, abgetrennt. Nach Abtrennung des Dispersionswassers wird ein wasserfeuchtes Pfropfpolymerisat erhalten, welches üblicherweise einen Restwassergehalt von bis zu 60 Gew.-% aufweist.

Im Unterschied zum Stand der Technik wird das erfindungsgemäße wasserfeuchte Pfropfpolymerisat nicht mit Wasser gewaschen. Durch das erfindungsgemäße Verfahren wird keine oder nur eine teilweise Trennung der Hilfsstoffe, wie z.B. Emulgatoren, Zerfallsprodukte der Radikalbildner, Puffersubstanzen erreicht, so dass ein erheblicher Teil von bis zu 100% der Hilfsstoffe im Pfropfpolymerisat und folglich im Endprodukt, d.h. dem wasserfeuchten Pfropfpolymerisat, verbleibt.

Der pH-Wert bei der Aufarbeitung der Pfropfpolymerisat-Dispersion im Schritt der Fällung (3.1 kann durch dem Fachmann bekannte Verfahren eingestellt werden, beispielsweise durch Zugabe von Puffer-Lösungen oder Mineralsäuren, vorzugsweise durch Zugabe einer oder mehrerer Säuren ausgewählt aus der Gruppe bestehend aus Schwefelsäure, Phosphorsäure, Salpetersäure und $C_1$ bis $C_8$-Carbonsäuren (z.B. Essigsäure). Ob die erfindungsgemäße Zusammensetzung saure Additive gemäß Komponente E enthalten muss, richtet sich nach dem pH-Wert bei der Aufarbeitung der Pfropfpolymerisat-Dispersion im Schritt der Fällung:

a) Findet die Fällung im sauren Medium (d.h. pH < 7) statt, so kann die erfindungsgemäße Zusammensetzung phosphorhaltige Flammschutzmittel gemäß Komponente D und/oder saure Additive gemäß Komponente E enthalten.

b) Findet die Fällung bei neutralem pH-Wert oder unter basischen Bedingungen (d.h. pH $\geq$ 7) statt, so muss die erfindungsgemäße Zusammensetzung phosphorhaltige Flammschutzmittel gemäß Komponente D und/oder saure Additive gemäß Komponente E enthalten.

Komponente C

Die Komponente C umfasst ein oder mehrere thermoplastische Vinyl(Co)Polymerisate C.1 und/oder Polyalkylenterephthalate C.2.

Geeignet sind als Vinyl(Co)Polymerisate C.1 Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)Polymerisate aus

C.1.1 50 bis 99, vorzugsweise 60 bis 80 Gew.-Teilen Vinylaromaten und/oder kernsubstituierten Vinylaromaten wie Styrol, $\alpha$-Methylstyrol, p-Methylstyrol, p-Chlorstyrol) und/oder (Meth)Acrylsäure-($C_1$-$C_8$)-Alkylester, wie Methylmethacrylat, Ethylmethacrylat), und

C.1.2 1 bis 50, vorzugsweise 20 bis 40 Gew.-Teilen Vinylcyanide (ungesättigte Nitrile) wie Acryl-nitril und Methacrylnitril und/oder (Meth)Acryl-säure-($C_1$-$C_8$)-Alkylester, wie Methylmeth-acrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate C.1 sind harzartig, thermoplastisch und kautschukfrei. Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere

durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

Die Polyalkylenterephthalate der Komponente C.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 mol-%, bezogen auf die Diolkomponente Ethylenglykol- und/oder Butandiol-1,4-Reste.

Die bevorzugten Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 mol-%, vorzugsweise bis zu 10 mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

<u>Komponente D</u>

Phosphorhaltige Flammschutzmittel (Komponente D) im erfindungsgemäßen Sinne sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (IV)

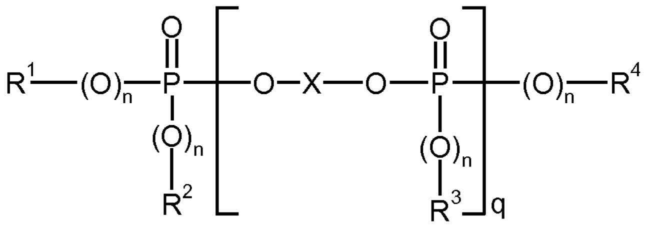

(IV)

worin

$R^1$, $R^2$, $R^3$ und $R^4$, unabhängig voneinander jeweils gegebenenfalls halogeniertes $C_1$ bis $C_8$-Alkyl, jeweils gegebe-

nenfalls durch Alkyl, vorzugsweise $C_1$ bis $C_4$-Alkyl, und/oder Halogen, vorzugsweise Chlor, Brom, substituiertes $C_5$ bis $C_6$-Cycloalkyl, $C_6$ bis $C_{20}$-Aryl oder $C_7$ bis $C_{12}$-Aralkyl,

n unabhängig voneinander, 0 oder 1,

q 0 bis 30 und

X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen $R^1$, $R^2$, $R^3$ und $R^4$ unabhängig voneinander für $C_1$ bis $C_4$-Alkyl, Phenyl, Naphthyl oder Phenyl-$C_1$-$C_4$-alkyl. Die aromatischen Gruppen $R^1$, $R^2$, $R^3$ und $R^4$ können ihrerseits mit Halogen- und/oder Alkylgruppen, vorzugsweise Chlor, Brom und/oder $C_1$ bis $C_4$-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.

n in der Formel (IV) kann, unabhängig voneinander, 0 oder 1 sein, vorzugsweise ist n gleich 1.

q steht für Werte von 0 bis 30, bevorzugt 0,3 bis 20, besonders bevorzugt 0,5 bis 10, insbesondere 0,5 bis 6, ganz besonders bevorzugt 1,0 bis 1,6.

X steht besonders bevorzugt für

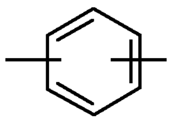 , 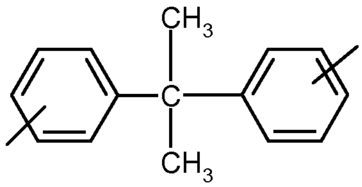 , 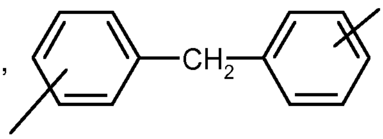 ,

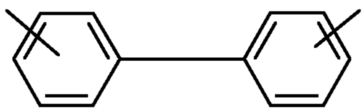 , 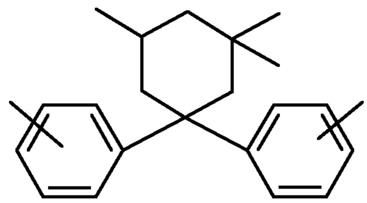

oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Als erfindungsgemäße Komponente D können auch Mischungen verschiedener Phosphate eingesetzt werden.

Phosphorverbindungen der Formel (IV) sind insbesondere Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Resorcin verbrücktes Oligophosphat und Bisphenol A verbrücktes Oligophosphat. Der Einsatz von oligomeren Phosphorsäureestern der Formel (IV), die sich vom Bisphenol A ableiten, ist insbesondere bevorzugt.

Höchst bevorzugt als Komponente D ist Bisphenol-A basierendes Oligophosphat gemäß Formel (IVa).

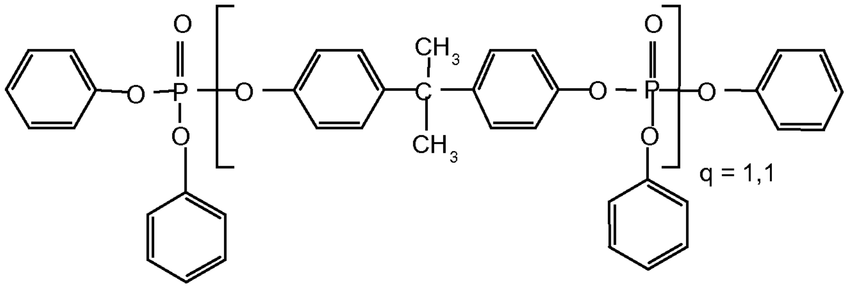

q = 1,1 (IVa)

Die Phosphorverbindungen gemäß Komponente D sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S.

177).

Wenn Mischungen verschiedener Phosphorverbindungen eingesetzt werden und im Fall von oligomeren Phosphorverbindungen, handelt es sich bei dem angegebenen q-Wert um den mittleren q-Wert. Der mittlere q-Wert kann bestimmt werden, indem mittels geeigneter Methode (Gaschromatographie (GC), High Pressure Liquid Chromatography (HPLC), Gelpermeationschromatographie (GPC)) die Zusammensetzung der Phosphorverbindung (Molekulargewichtsverteilung) bestimmt wird und daraus die Mittelwerte für q berechnet werden.

Weiterhin können Phosphonatamine und Phosphazene, wie sie in WO 00/00541 und WO 01/18105 beschrieben sind, als Flammschutzmittel eingesetzt werden.

Die Flammschutzmittel können allein oder in beliebiger Mischung untereinander oder in Mischung mit anderen Flammschutzmitteln eingesetzt werden.

Die phosphorhaltigen Flammschutzmittel gemäß Komponente D enthalten Spuren an Säure (z.B. Phosphorsäure, sauere Phosphorsäureester), die sich durch eine Titration mit KOH durch Säurezahl (in mg KOH/g Substanz) quantifizieren lassen und üblicherweise im Bereich von 0,01 bis 1 mg KOH/g Substanz, bevorzugt von 0,02 bis 0,5 mg KOH/ g Substanz und besonders bevorzugt von 0,03 mg KOH bis 0,3 mg KOH/g Substanz liegen.

Komponente E

Bevorzugt sind die sauren Additive gemäß Komponente E ausgewählt aus mindestens einer der Gruppe der aliphatischen Mono- und Dicarbonsäuren, der aromatischen Mono- und Dicarbonsäuren, der hydroxyfunktionalisierten Dicarbonsäuren, Phosphorsäure, saueren Phosphorsäure-Natrium oder Kalium-Salzen. Bevorzugt sind Zitronensäure, Oxalsäure, Terephthalsäure oder Gemische der genannten Verbindungen. Besonders bevorzugt ist Zitronensäure.

Komponente F

Die Zusammensetzung kann weitere handelsübliche Zusatzstoffe gemäß Komponente F wie Flammschutzsynergisten, von Komponente B verschiedene kautschukmodifizierte Pfropfpolymerisate, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, Alkyl-Sulfonate oder Polyamidhaltige Polymere), Säuren, Füll- und Verstärkungsstoffe (beispielsweise Glas- oder Karbonfasern, Glimmer, Kaolin, Talk, $CaCO_3$ und Glasschuppen) sowie Farbstoffe und Pigmente enthalten.

Die von Komponente B verschiedenen Pfropfpolymerisate werden durch radikalische Polymerisation, z.B. durch Emulsions-, Suspensions-, Lösungs- oder Massepolymerisation, hergestellt, wobei im Falle der Emulsionspolymerisation ein von Alkalimetall- oder Ammoniumsalzen gesättigter Fettsäuren verschiedener Emulgator eingesetzt wird. Bevorzugt sind von Komponente B verschiedenen Pfropfpolymerisate, die durch Lösungs- oder Massepolymerisation hergestellt werden.

**Herstellung der Formmassen und Formkörper**

Die erfindungsgemäßen thermoplastischen Formmassen werden hergestellt, indem man die jeweiligen Bestandteile in bekannter Weise vermischt und bei Temperaturen von 260°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung sind ebenfalls Verfahren zur Herstellung der Formmassen und die Verwendung der Formmassen zur Herstellung von Formkörpern sowie die Formteile selbst.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Fernsehgeräte, Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte

und Gehäuse dafür, Spielfahrzeuge für Kinder, flächige Wandelemente, Gehäuse für Sicherheitseinrichtungen und für Fernsehgeräte, wärmeisolierte Transportbehältnisse, Formteile für Sanitär- und Badausrüstungen, Abdeckgitter für Lüfteröffnungen und Gehäuse für Gartengeräte.

Die folgenden Beispiele dienen der weiteren Erläuterung der Erfindung.

**Beispiele**

**Komponente A**

**A.1:** Lineares Polycarbonat auf Basis Bisphenol-A mit einem gewichtsgemittelten Molekulargewicht $M_w$ von 27500 g/mol (bestimmt durch GPC in $CH_2Cl_2$ bei 25°C).

**A.2:** Lineares Polycarbonat auf Basis Bisphenol-A mit einem gewichtsgemitteltem Molekulargewicht $\overline{M}_w$ von 28500 g/mol (bestimmt durch GPC in $CH_2Cl_2$ bei 25°C).

**Komponente B**

Emulsions-Pfropfpolymerisate vom Typ B

Alle Gewichtsteilangaben in den nachstehenden Beispielen zu Pfropfpolymerisaten sind so normiert, dass bei jedem nachfolgend angegebenen Pfropfpolymerisat die Summe aus der Gewichtsteile (Gew.-Teile) der Pfropfgrundlage (Polybutadien) und der Gew.-Teile der Pfropfmonomere (Styrol und Acrylnitril) 100 Gew.-Teile ergibt. Die Mengen an Wasser, Emulgatoren, Initiatoren und anderen Hilfsmitteln beziehen sich auf diese Summe der Gew.-Teile der Pfropfgrundlage und der Pfropfmonomeren (= 100 Gew.-Teile).

**Allgemeine Vorschrift (I):**

**1. Schritt: Herstellung der Kautschukgrundlage B2:**

Die für die Herstellung der Komponente B (Emulsions-Pfropfpolymerisat) eingesetzte teilchenförmige vernetzte Kautschukgrundlage wurde durch radikalische Emulsionspolymerisation von Butadien in Gegenwart von Natrium-Salz eines speziellen TCD-Emulgators, wie er in DE 3913509A1 (Beispiel 1) beschrieben wird, hergestellt. Die so erhaltene Polybutadiengrundlage B2 weist eine mittlere gewichtsgemittelte Teichengröße $d_{50}$ = 350 nm auf und wird in Form von Polymerlatices, welche einen Feststoffgehalt von 25 Gew.-% aufweist, im weiteren Reaktionsschritt eingesetzt.

**2. Schritt: Herstellung der Komponente B.**

60 Gew.-Teile B2 sowie 0 - 3 Gew.-Teile des jeweils eingesetzten Emulgators (siehe unten die Angabe bei dem jeweiligen Pfropfpolymerisat) werden unter Stickstoff auf 65 °C erwärmt und mit 0,5 Gew.-Teilen Kaliumperoxodisulfat (gelöst in 20 Gew.-Teilen Wasser) sowie 0,3 Gew.-Teile Natriumhydroxid (gelöst in 20 Gew.-Teilen Wasser) versetzt. Danach wird ein Gemisch aus 30 Gew.-Teilen Styrol und 10 Gew.-Teilen Acrylnitril innerhalb 4 Stunden zudosiert, wobei die Pfropfreaktion stattfindet. Nach Ende der Dosierung wird die Temperatur innerhalb einer Stunde auf 80°C erhöht und es wird weitere 3 Stunden bei 80°C gerührt. Danach ist die hergestellte Pfropfpolymerisat-Dispersion bereit zur Aufarbeitung (Schritt 3).

**3. Schritt: Aufarbeitung.**

Die Pfropfpolymerisat-Dispersion wird in einer Fälllösung (bestehend entweder aus 2 Teilen Magnesiumsulfat und 100 Teilen Wasser, oder aus 2 Teilen Magnesiumsulfat, 1 Teil Essigsäure und 100 Tle Wasser) bei 95°C ausgefällt, abfiltriert, gegebenenfalls (d.h. im Fall eines Vergleichbeispiels) gewaschen und das resultierende Pulver bei 70 °C im Vakuum bis zu einem Restfeuchtegehalt von < 0.5% getrocknet.

**Allgemeine Vorschrift (II):**

**1. Schritt: Herstellung der Kautschukgrundlage B2:**

Dies erfolgt wie oben unter der allgemeinen Vorschrift (I) im Schritt 1 angegeben.

**2. Schritt: Herstellung der Komponente B.**

60 Gew.-Teile B2 sowie 0 - 3 Gew.-Teile des jeweils eingesetzten Emulgators (siehe unten die Angabe bei dem jeweiligen Pfropfpolymerisat) werden unter Stickstoff auf 65 °C erwärmt. 0,4 Gew.-Teile tert-Butylhydroperoxid (gelöst in 20 Gew.-Teilen Wasser) und 0,5 Gew.-Teile Natriumascorbat (gelöst in 20 Gew.-Teilen Wasser) werden innerhalb 4 Stunden zudosiert. Parallel dazu wird ein Gemisch aus 30 Gew.-Teilen Styrol und 10 Gew.-Teilen Acrylnitril innerhalb 4 Stunden zudosiert, wobei die Pfropfreaktion stattfindet. Nach Ende der Styrol- und Acrylnitril-Dosierung werden zur Reaktionsmischung 0,1 Gew.-Teile tert-Butylhydroperoxid (gelöst in 5 Gew.-Teilen Wasser) und 0,125 Gew.-Teile Natriumascorbat (gelöst in 5 Gew.-Teilen Wasser) innerhalb einer Stunde zudosiert und die Temperatur wird innerhalb dieser Stunde auf 80°C erhöht. Es wird danach für weitere 3 Stunden bei 80°C gerührt. Danach ist die hergestellte Pfropfpolymerisat-Dispersion bereit zur Aufarbeitung (Schritt 3).

**3. Schritt: Aufarbeitung.**

Die Pfropfpolymerisat-Dispersion wird in einer Fälllösung (bestehend entweder aus 2 Teilen Magnesiumsulfat und 100 Teilen Wasser, oder aus 2 Teilen Magnesiumsulfat, 1 Teil Essigsäure und 100 Teilen Wasser) bei 95°C ausgefällt, ab filtriert, gegebenenfalls (d.h. im Fall eines Vergleichbeispiels) gewaschen und das resultierende Pulver bei 70 °C im Vakuum bis zu einem Restfeuchtegehalt von < 0.5% getrocknet.

**Herstellung der Pfropfpolymerisate B(1) bis B(30):**

**Pfropfpolymerisat B(1):**

Herstellung gemäß der allgemeinen Vorschrift (I)

2. Schritt: Emulgator: 2,0 Gew.-Teile des Kaliumsalzes von Stearinsäure (Sigma-Aldrich).
3. Schritt:

    a) Fällung: Fälllösung Magnesiumsulfat / Wasser.
    b) Abtrennung: Das nach der Fällung erhaltene Koagulat wird nur abfiltriert (ca. 20 L Filtratlösung) und nicht gewaschen.

**Pfropfpolymerisat B(2):**

Herstellung gemäß der allgemeinen Vorschrift (I)

2. Schritt: Emulgator: 2,0 Gew.-Teile des Kaliumsalzes von Stearinsäure (Sigma-Aldrich).
3. Schritt:

    a) Fällung:: Fälllösung Magnesiumsulfat / Essigsäure / Wasser.
    b) Abtrennung: Das nach der Fällung erhaltene Koagulat wird nur abfiltriert (ca. 20 L Filtratlösung) und nicht gewaschen.

**Pfropfpolymerisat B(3):**

Herstellung gemäß der allgemeinen Vorschrift (II)

2. Schritt: Emulgator: 2,0 Gew.-Teile des Kaliumsalzes von Stearinsäure (Sigma-Aldrich).
3. Schritt:

    a) Fällung: Fälllösung Magnesiumsulfat / Wasser.
    b) Abtrennung: Das nach der Fällung erhaltene Koagulat wird nur abfiltriert (ca. 20 L Filtratlösung) und nicht

gewaschen.

**Pfropfpolymerisat B(4):**

Herstellung gemäß der allgemeinen Vorschrift (II)

2. Schritt: Emulgator: 2,0 Gew.-Teile des Kaliumsalzes von Stearinsäure (Sigma-Aldrich).
3. Schritt: a) Fällung: Koagulation und Koagulataufarbeitung: Fälllösung Magnesiumsulfat / Essigsäure/Wasser.

b) Abtrennung: Das nach der Fällung erhaltene Koagulat wird nur abfiltriert (ca. 20 L Filtratlösung) und nicht gewaschen.

**Pfropfpolymerisat B(5):**

Herstellung gemäß der allgemeinen Vorschrift (II)

2. Schritt: Emulgator: 1,0 Gew.-Teile des Kaliumsalzes von Stearinsäure (Sigma-Aldrich).
3. Schritt:

a) Fällung: Fälllösung Magnesiumsulfat / Essigsäure / Wasser.
b) Abtrennung: Das nach der Fällung erhaltene Koagulat wird nur abfiltriert (ca. 20 L Filtratlösung) und sorgfältig gewaschen (d.h. 4-mal in destilliertem Wasser aufgeschlämmt, anschließend abfiltriert und mit einer großen Menge destilliertem Wasser gewaschen (insgesamt ca. 80 Liter pro 1 kg Polymerisat)).

**Pfropfpolymerisat B(6):**

Herstellung gemäß der allgemeinen Vorschrift (II)

2. Schritt: Emulgator: 2,0 Gew.-Teile des Kaliumsalzes von Stearinsäure (Sigma-Aldrich).
3. Schritt:

a) Fällung:: Fälllösung Magnesiumsulfat / Essigsäure / Wasser.
b) Abtrennung: Das nach der Fällung erhaltene Koagulat wird nur abfiltriert (ca. 20 L Filtratlösung) und sorgfältig gewaschen (d.h. 4-mal in destilliertem Wasser aufgeschlämmt, anschließend abfiltriert und mit einer großen Menge destilliertem Wasser gewaschen (insgesamt ca. 80 Liter pro 1 kg Polymerisat)).

**Pfropfpolymerisat B(7):**

Herstellung gemäß der allgemeinen Vorschrift (II)

2. Schritt: Emulgator: 3,0 Gew.-Teile des Kaliumsalzes von Stearinsäure (Sigma-Aldrich).
3. Schritt:

a) Fällung: Fälllösung Magnesiumsulfat / Essigsäure / Wasser.
b) Abtrennung: Das nach der Fällung erhaltene Koagulat wird nur abfiltriert (ca. 20 L Filtratlösung) und sorgfältig gewaschen (d.h. 4-mal in destilliertem Wasser aufgeschlämmt, anschließend abfiltriert und mit einer großen Menge destilliertem Wasser gewaschen (insgesamt ca. 80 Liter pro 1 kg Polymerisat)).

**Pfropfpolymerisat B(8):**

Herstellung gemäß der allgemeinen Vorschrift (I)

2. Schritt: Emulgator: 2,0 Gew.-Teile des Kaliumsalzes von Stearinsäure (Sigma-Aldrich).
3. Schritt:

a) Fällung: Fälllösung Magnesiumsulfat / Wasser.
b) Abtrennung: Das nach der Fällung erhaltene Koagulat wird nur abfiltriert (ca. 20 L Filtratlösung) und einmal mit einer großen Menge destilliertem Wasser (d.h. ca. 20 Liter pro 1 kg Polymerisat) gewaschen.

**Pfropfpolymerisat B(9):**

Herstellung gemäß der allgemeinen Vorschrift (I)

2. Schritt: Emulgator: 2,0 Gew.-Teile des Kaliumsalzes von Stearinsäure (Sigma-Aldrich).
3. Schritt:

a) Fällung: Fälllösung Magnesiumsulfat / Essigsäure / Wasser.
b) Abtrennung: Das nach der Fällung erhaltene Koagulat wird nur abfiltriert (ca. 20 L Filtratlösung) und einmal mit einer großen Menge destilliertem Wasser (d.h. ca. 20 Liter pro 1 kg Polymerisat) gewaschen.

**Pfropfpolymerisat B(10):**

Herstellung gemäß der allgemeinen Vorschrift (I)

2. Schritt: Emulgator: 2,0 Gew.-Teile des Kaliumsalzes von Stearinsäure (Sigma-Aldrich).
3. Schritt:

a) Fällung: Fälllösung Magnesiumsulfat / Wasser.
b) Abtrennung: Das nach der Fällung erhaltene Koagulat wird nur abfiltriert (ca. 20 L Filtratlösung) und sorgfältig gewaschen (d.h. 4-mal in destilliertem Wasser aufgeschlämmt, anschließend abfiltriert und mit einer großen Menge destilliertem Wasser gewaschen (insgesamt ca. 80 Liter pro 1 kg Polymerisat)).

**Pfropfpolymerisat B(11):**

Herstellung gemäß der allgemeinen Vorschrift (I)

2. Schritt: Emulgator: 2,0 Gew.-Teile des Kaliumsalzes von Stearinsäure (Sigma-Aldrich).
3. Schritt:

a) Fällung: Fälllösung Magnesiumsulfat / Essigsäure / Wasser.
b) Abtrennung: Das nach der Fällung erhaltene Koagulat wird nur abfiltriert (ca. 20 L Filtratlösung) und sorgfältig gewaschen (d.h. 4-mal in destilliertem Wasser aufgeschlämmt, anschließend abfiltriert und mit einer großen Menge destilliertem Wasser gewaschen (insgesamt ca. 80 Liter pro 1 kg Polymerisat)).

**Pfropfpolymerisat B(12):**

Herstellung gemäß der allgemeinen Vorschrift (II)

2. Schritt: Emulgator: 2,0 Gew.-Teile des Kaliumsalzes von Stearinsäure (Sigma-Aldrich).
3. Schritt:

a) Fällung: Fälllösung Magnesiumsulfat / Wasser.
b) Abtrennung: Das nach der Fällung erhaltene Koagulat wird nur abfiltriert (ca. 20 L Filtratlösung) und einmal mit einer großen Menge destilliertem Wasser (d.h. ca. 20 Liter pro 1 kg Polymerisat) gewaschen.

**Pfropfpolymerisat B(13):**

Herstellung gemäß der allgemeinen Vorschrift (II)

2. Schritt: Emulgator: 2,0 Gew.-Teile des Kaliumsalzes von Stearinsäure (Sigma-Aldrich).
3. Schritt:

a) Fällung: Fälllösung Magnesiumsulfat / Essigsäure / Wasser.
b) Abtrennung: Das nach der Fällung erhaltene Koagulat wird nur abfiltriert (ca. 20 L Filtratlösung) und einmal mit einer großen Menge destilliertem Wasser (d.h. ca. 20 Liter pro 1 kg Polymerisat) gewaschen.

**Pfropfpolymerisat B(14):**

Herstellung gemäß der allgemeinen Vorschrift (II)

2. Schritt: Emulgator: 2,0 Gew.-Teile des Kaliumsalzes von Stearinsäure (Sigma-Aldrich).
3. Schritt:

a) Fällung: Fälllösung Magnesiumsulfat / Wasser. Das nach der Fällung erhaltene Koagulat wird abfiltriert (ca. 20 L Filtratlösung) und sorgfältig gewaschen (d.h. 4-mal in destilliertem Wasser aufgeschlämmt, anschließend abfiltriert und mit einer großen Menge destilliertem Wasser gewaschen (insgesamt ca. 80 Liter pro 1 kg Polymerisat)).

**Pfropfpolymerisat B(15):**

Herstellung gemäß der allgemeinen Vorschrift (II)

2. Schritt: Emulgator: 2,0 Gew.-Teile des Kaliumsalzes von Stearinsäure (Sigma-Aldrich).
3. Schritt:

a) Fällung:Fälllösung Magnesiumsulfat / Essigsäure / Wasser.
b) Abtrennung: Das nach der Fällung erhaltene Koagulat wird abfiltriert (ca. 20 L Filtratlösung) und sorgfältig gewaschen (d.h. 4-mal in destilliertem Wasser aufgeschlämmt, anschließend abfiltriert und mit einer großen Menge destilliertem Wasser gewaschen (insgesamt ca. 80 Liter pro 1 kg Polymerisat)).

**Pfropfpolymerisat B(16) (Vergleich):**

Herstellung gemäß der allgemeinen Vorschrift (I)

2. Schritt: Emulgator: Pfropfpolymerisation erfolgte emulgatorfrei.
3. Schritt:

a) Fällung: Fälllösung Magnesiumsulfat / Essigsäure / Wasser.
b) Abtrennung: Das nach der Fällung erhaltene Koagulat wird abfiltriert (ca. 20 L Filtratlösung) und sorgfältig gewaschen (d.h. 4-mal in destilliertem Wasser aufgeschlämmt, anschließend abfiltriert und mit einer großen Menge destilliertem Wasser gewaschen (insgesamt ca. 80 Liter pro 1 kg Polymerisat)).

**Pfropfpolymerisat B(17) (Vergleich):**

Herstellung gemäß der allgemeinen Vorschrift (I)

2. Schritt: Emulgator: Pfropfpolymerisation erfolgte mit 1 Gew.-Teil des Natriumsalzes eines disproportionierten Harzsäureemulgators Dresinate 731 (Abieta-Chemie).
3. Schritt:

a) Fällung: Fälllösung Magnesiumsulfat / Essigsäure / Wasser.
b) Abtrennung: Das nach der Fällung erhaltene Koagulat wird abfiltriert (ca. 20 L Filtratlösung) und nicht gewaschen.

**Pfropfpolymerisat B(18) (Vergleich):**

Herstellung gemäß der allgemeinen Vorschrift (II)

2. Schritt: Emulgator: Pfropfpolymerisation erfolgte mit 1 Gew.Teil des Natriumsalzes eines disproportionierten Harzsäureemulgators Dresinate 731 (Abieta Chemie).
3. Schritt:

a) Fällung: Fälllösung Magnesiumsulfat / Essigsäure / Wasser.
b) Abtrennung: Das nach der Fällung erhaltene Koagulat wird abfiltriert (ca. 20 L Filtratlösung) und nicht gewaschen.

**Pfropfpolymerisat B(19) (Vergleich):**

Herstellung gemäß der allgemeinen Vorschrift (II)

2. Schritt: Emulgator: Pfropfpolymerisation erfolgte mit 2 Gew.-Teilen des Natriumsalzes eines disproportionierten Harzsäureemulgators Dresinate 731 (Abieta Chemie).
3. Schritt:

a) Fällung: Fälllösung Magnesiumsulfat / Essigsäure / Wasser.
b) Abtrennung: Das nach der Fällung erhaltene Koagulat wird abfiltriert (ca. 20 L Filtratlösung) und nicht gewaschen.

**Pfropfpolymerisat B(20) (Vergleich):**

Herstellung gemäß der allgemeinen Vorschrift (II)

2. Schritt: Emulgator: 2,0 Gew.-Teile von Natriumdodecylsulfat (Sigma-Aldrich).
3. Schritt:

a) Fällung: Fälllösung Magnesiumsulfat / Wasser.
b) Abtrennung: Das nach der Fällung erhaltene Koagulat wird nur abfiltriert (ca. 20 L Filtratlösung) und nicht gewaschen.

**Pfropfpolymerisat B(21) (Vergleich):**

Herstellung gemäß der allgemeinen Vorschrift (II)

2. Schritt: Emulgator: 2,0 Gew.-Teile von Natriumdodecylsulfat (Sigma-Aldrich).
3. Schritt:

a) Fällung: Fälllösung Magnesiumsulfat / Essigsäure / Wasser.
b) Abtrennung: Das nach der Fällung erhaltene Koagulat wird nur abfiltriert (ca. 20 L Filtratlösung) und nicht gewaschen.

**Pfropfpolymerisat B(22) (Vergleich):**

Herstellung gemäß der allgemeinen Vorschrift (II)

2. Schritt: Emulgator: 2,0 Gew.-Teile von Natriumdodecylsulfat (Sigma-Aldrich).
3. Schritt:

a) Fällung: Fälllösung Magnesiumsulfat / Wasser.
b) Abtrennung: Das nach der Fällung erhaltene Koagulat wird nur abfiltriert (ca. 20 L Filtratlösung) und einmal mit einer großen Menge destilliertem Wasser (d.h. ca. 20 Liter pro 1 kg Polymerisat) gewaschen.

**Pfropfpolymerisat B(23) (Vergleich):**

Herstellung gemäß der allgemeinen Vorschrift (II)

2. Schritt: Emulgator: 2,0 Gew.-Teile von Natriumdodecylsulfat (Sigma-Aldrich).
3. Schritt:

a) Fällung: Fälllösung Magnesiumsulfat / Essigsäure / Wasser.
b) Abtrennung: Das nach der Fällung erhaltene Koagulat wird nur abfiltriert (ca. 20 L Filtratlösung) und einmal mit einer großen Menge destilliertem Wasser (d.h. ca. 20 Liter pro 1 kg Polymerisat) gewaschen.

**Pfropfpolymerisat B(24) (Vergleich):**

Herstellung gemäß der allgemeinen Vorschrift (II)

2. Schritt: Emulgator: 2,0 Gew.-Teile von Natriumdodecylsulfat (Sigma-Aldrich).
3. Schritt:

a) Fällung: Fälllösung Magnesiumsulfat / Wasser.
b) Abtrennung: Das nach der Fällung erhaltene Koagulat wird nur abfiltriert (ca. 20 L Filtratlösung) und sorgfältig gewaschen (d.h. 4-mal in destilliertem Wasser aufgeschlämmt, anschließend abfiltriert und mit einer großen Menge destilliertem Wasser gewaschen (insgesamt ca. 80 Liter pro 1 kg Polymerisat)).

**Pfropfpolymerisat B(25) (Vergleich):**

Herstellung gemäß der allgemeinen Vorschrift (II)

2. Schritt: Emulgator: 2,0 Gew.-Teile von Natriumdodecylsulfat (Sigma-Aldrich).
3. Schritt:

a) Fällung: Fälllösung Magnesiumsulfat / Essigsäure / Wasser.
b) Abtrennung: Das nach der Fällung erhaltene Koagulat wird nur abfiltriert (ca. 20 L Filtratlösung) und sorgfältig gewaschen (d.h. 4-mal in destilliertem Wasser aufgeschlämmt, anschließend abfiltriert und mit einer großen Menge destilliertem Wasser gewaschen (insgesamt ca. 80 Liter pro 1 kg Polymerisat)).

**Pfropfpolymerisat B(26) (Vergleich):**

Herstellung gemäß der allgemeinen Vorschrift (II)

2. Schritt: Emulgator: 1,5 Gew.-Teile von Natriumdodecylsulfat (Sigma-Aldrich).
3. Schritt:

a) Fällung: Fälllösung Magnesiumsulfat / Essigsäure / Wasser.
b) Abtrennung: Das nach der Fällung erhaltene Koagulat wird nur abfiltriert (ca. 20 L Filtratlösung) und sorgfältig gewaschen (d.h. 4-mal in destilliertem Wasser aufgeschlämmt, anschließend abfiltriert und mit einer großen Menge destilliertem Wasser gewaschen (insgesamt ca. 80 Liter pro 1 kg Polymerisat)).

**Pfropfpolymerisat B(27) (Vergleich):**

Herstellung gemäß der allgemeinen Vorschrift (II)

2. Schritt: Emulgator: 1,5 Gew.-Teile von Dowfax 2A1 (Natrium-Salz(e) eines sulfonierten Diphenyletherderivats) (Sigma-Aldrich).
3. Schritt:

a) Fällung: Fälllösung Magnesiumsulfat / Essigsäure / Wasser.
b) Abtrennung: Das nach der Fällung erhaltene Koagulat wird nur abfiltriert (ca. 20 L Filtratlösung) und sorgfältig gewaschen (d.h. 4-mal in destilliertem Wasser aufgeschlämmt, anschließend abfiltriert und mit einer großen Menge destilliertem Wasser gewaschen (insgesamt ca.

80 Liter pro 1 kg Polymerisat)).

**Pfropfpolymerisat B(28) (Vergleich):**

Herstellung gemäß der allgemeinen Vorschrift (II)

2. Schritt: Emulgator: 2,0 Gew.-Teile von Dowfax 2A1 (Natrium-Salz(e) eines sulfonierten Diphenyletherderivats) (Sigma-Aldrich).
3. Schritt:

a) Fällung: Fälllösung Magnesiumsulfat / Essigsäure / Wasser.
b) Abtrennung: Das nach der Fällung erhaltene Koagulat wird nur abfiltriert (ca. 20 L Filtratlösung) und sorgfältig gewaschen (d.h. 4-mal in destilliertem Wasser aufgeschlämmt, anschließend abfiltriert und mit einer großen Menge destilliertem Wasser gewaschen (insgesamt ca. 80 Liter pro 1 kg Polymerisat)).

**Pfropfpolymerisat B(29) (Vergleich):**

Herstellung gemäß der allgemeinen Vorschrift (II)

2. Schritt: Emulgator: 1,0 Gew.-Teile von Dowfax 3B2 (Natrium-Salz(e) eines sulfonierten Diphenyletherderivats) (Sigma-Aldrich).
3. Schritt:

a) Fällung: Fälllösung Magnesiumsulfat / Essigsäure / Wasser.
b) Abtrennung: Das nach der Fällung erhaltene Koagulat wird nur abfiltriert (ca. 20 L Filtratlösung) und sorgfältig gewaschen (d.h. 4-mal in destilliertem Wasser aufgeschlämmt, anschließend abfiltriert und mit einer großen Menge destilliertem Wasser gewaschen (insgesamt ca. 80 Liter pro 1 kg Polymerisat)).

**Pfropfpolymerisat B(30) (Vergleich):**

Herstellung gemäß der allgemeinen Vorschrift (II)

2. Schritt: Emulgator: 1,0 Gew.-Teile von Natriumdodecylsulfat (Sigma-Aldrich).
3. Schritt:

a) Fällung: Fälllösung Magnesiumsulfat / Essigsäure / Wasser.
b) Abtrennung: Das nach der Fällung erhaltene Koagulat wird nur abfiltriert (ca. 20 L Filtratlösung) und sorgfältig gewaschen (d.h. 4-mal in destilliertem Wasser aufgeschlämmt, anschließend abfiltriert und mit einer großen Menge destilliertem Wasser gewaschen (insgesamt ca. 80 Liter pro 1 kg Polymerisat)).

**Komponente C.1**

Copolymerisat aus 75 Gew.-% Styrol und 25 Gew.-% Acrylnitril mit einem gewichtsgemittelten Molekulargewicht $M_w$ von 130 kg/mol (bestimmt durch GPC), hergestellt nach dem Massepolymerisationsverfahren.

**Komponente D.1**

Bisphenol-A-diphenyldiphosphat, Reofos BAPP, Fa. Great Lakes (enthält Spuren Säure im Sinne der Komponente E. Säurezahl: 0,06 mg KOH / g Substanz)

**Komponente E**

E.1 Zitronensäure (wasserfrei), Fa. DSM

**Komponente F**

F.1 Pentaerythrittetrastearat als Gleit-/Entformungsmittel
F.2 Phosphitstabilisator, Irganox® B 900, Fa. Ciba Speciality Chemicals
F.3 Magnesiumstearat als Gleit-/Entformungsmittel, Fa. Sigma-Aldrich
F.4 Poly(perfluorethylen) PTFE, Polyflon FA-500, Fa. Daikin
F.5 Böhmit, Pural 200, Fa. Sasol
F.6 Santac® AT 08 der Fa. Nippon A&L (ein ABS hergestellt im Masse-Polymerisationsverfahren)
F.7 Magnum® 3904 der Fa. Dow Chemicals (ein ABS hergestellt im Masse-Polymerisationsverfahren)

**Herstellung und Prüfung der Formmassen**

In einem 1,5 L Innenkneter werden die in Tabellen 1 bis 3 aufgeführten Zusammensetzungen hergestellt.

Tabelle 1: PC/ABS-Zusammensetzung ohne Flammschutzmittel

| Komponente | Gew.-Tle |
|---|---|
| A.1 | 58 |
| B | 18 |
| C.1 | 24 |
| F.1 | 0,75 |
| F.2 | 0,1 |
| E.1 (optional) | 0 oder 0,1 |
| F.3 (optional) | 0 oder 0,4 |

Tabelle 2: PC/ABS-Zusammensetzung ohne Flammschutzmittel (Vergleich)

| Komponente | Gew.-Tle |
|---|---|
| A.1 | 60 |
| F.7 | 40 |
| F.1 | 0,5 |
| F.2 | 0,1 |

Tabelle 3: flammgeschützte PC/ABS-Zusammensetzung

| Komponente | Gew.-Tle |
|---|---|
| A.2 | 70,5 |
| B | 4,0 |
| D.1 (auch im Sinne der Komponente E) | 13,0 |
| F.1 | 0,3 |
| F.2 | 0,1 |
| F.3 (optional) | 0 oder 0,4 |
| F.4 | 0,5 |
| F.5 | 0,8 |
| F.6 | 10,8 |

Die Beurteilung der **Eigenfarbe / des Rohtons** erfolgte durch die Bestimmung des Yellowness Index (YI) an Farbmusterplatten mit den Abmessungen 60 x 40 x 2 mm gemäß der ASTM-Norm E-313-96 (Lichtart: C, Beobachter: 2°, Messöffnung: Large Area Value) nach der Gleichung YI = (128X - 106Z)/Y, mit X,Y,Z = Farbkoordinaten gemäß DIN 5033.

Als Maß für die **Hydrolysebeständigkeit** der so hergestellten Zusammensetzungen dient die Änderung des MVR gemessen nach ISO 1133 bei 260°C (bei 240°C für PC/ABS-Zusammensetzungen mit Flammschutzmittel) mit einer Stempellast von 5 kg bei einer 7-tägigen Lagerung des Granulats bei 95°C und 100% relativer Luftfeuchte ("FWL-Lagerung"). Dabei wird der Anstieg des MVR-Wertes gegenüber dem MVR-Wert vor der entsprechenden Lagerung als $\Delta$MVR(hydr.),welcher sich durch nachstehende Formel definiert, berechnet.

$$\Delta MVR(hyrdr) = \frac{MVR(nach FWL - Lagerung) - MVR(vor Lagerung)}{MVR(vor Lagerung)} \bullet 100\%$$

Als Maß für die **Verarbeitungsstabilität** der so hergestellten Zusammensetzungen dient die Änderung (in Prozent) des MVR gemessen nach ISO 1133 bei 260°C für nicht flammgeschützte und bei 240°C für flammgeschützte PC/ABS-Zusammensetzungen mit einer Stempellast von 5kg bei einer 15-minütigen Verweilzeit der Schmelze unter Luftausschluss bei einer Temperatur von 300°C. Die resultierende Größe ΔMVR(proc.) berechnet sich durch nachstehende Formel.

$$\Delta MVR(proc.) = \frac{MVR(nach Schmelzelagerung) - MVR(vor Lagerung)}{MVR(vor Lagerung)} \bullet 100\%$$

In den Tabellen 4 und 5 (eingesetzt wurden die Polycarbonat-Zusammensetzungen gemäß Tabelle 1 und gemäß Tabelle 2, d.h. ohne Flammschutzmittel) sind Ergebnisse der Lagerung in feuchten Klimata (Hydrolysestabilität) und bei 300°C (Verarbeitungsstabilität) zusammengefasst:

Alle erfindungsgemäßen Zusammensetzungen 2, 3 und 5 bis 17 zeigen durchgehend eine gute Eigenfarbe mit Yellowness Indices <30, die an den bei 260°C abgespritzten Formkörpern gemessen wurden. Vergleicht man diese Zusammensetzungen 2, 3 und 5 bis 17 mit der Zusammensetzung 18, bei der die Komponente B16 in Abwesenheit eines Emulgators hergestellt wurde, so wird der positive Einfluss des Fettsäure-Emulgators (Kaliumstearat) auf die Eigenfarbe der Polycarbonat-Zusammensetzungen eindeutig klar - der für die Zusammensetzung 18 gemessene Yellowness Index liegt bei 33 (Spritzguss bei 260/80°C) signifikant höher. Vergleicht man die Yellowness Indices der Zusammensetzungen 2, 3, 5 bis 17 mit denjenigen von VergleichsZusammensetzungen 19 bis 22 (YI > 30, Spritzguss bei 260°/80°C), deren Komponenten B mit einem Harzsäure-basierenden Emulgator hergestellt wurden, so zeigen die erfindungsgemäßen Zusammensetzungen auch in diesem Falle einen besseren Rohton. Dies bedeutet, dass die Auswahl der auf gesättigten Fettsäuren basierenden Emulgatoren aus der allgemeinen Klasse carboxylat-haltigen Emulgatoren, zu denen auch Harzsäurederivate zählen, entscheidend ist, um bei den Polycarbonat-Zusammensetzungen, die als schlagzähmodifizierende Komponente ein Emulsionspfropfpolymerisat enthalten, eine gute Eigenfarbe zu erzielen. Lediglich für die Zusammensetzung 23 beobachtet man einen Yellowness Index von 28, der sich durch die Zugabe von Magnesiumstearat erklären lässt, allerdings mit einer gleichzeitigen dramatischen Verschlechterung der Hydrolysebeständigkeit und der Schmelze- bzw. Verarbeitungsstabilität.

Vergleicht man nun die Zusammensetzungen 2, 3, 5 bis 17 mit den aus dem Stand der Technik bekannten Zusammensetzungen 24 bis 36, die laut EP-A 0 900 827 im wesentlichen frei von basischen Verunreinigungen sind und Polycarbonat nicht abbauen, so stellt man fest, dass bei allen Vergleichszusammensetzungen Yellowness Indices mit Werten von bis zu 56 deutlich größer 30 (Spritzguss bei 260°/80°C) beobachtet werden und dass die Hydrolyse- und Schmelzeviskosität der Zusammensetzungen aus Vergleichsbeispielen nur dann auf einem guten Niveau sind, wenn die Emulsionspfropf-Komponente B im Aufarbeitungsschritt gewaschen wurde. Die erfindungsgemäßen Zusammensetzungen 2, 3 und 5 bis 17 zeigen in allen Fällen eine gegenüber den Zusammensetzungen 24 bis 36 deutlich bessere Eigenfarbe, vergleichbar gute Hydrolysestabilität und in mehreren Fällen eine deutlich bessere Schmelze- bzw. Verarbeitungsstabilität.

Die Eigenfarbe der erfindungsgemäßen Zusammensetzungen zeigt selbst bei hohen, aber für Polycarbonat-Formmassen nicht ungewöhnlichen Verarbeitungstemperaturen von 300°C nur eine geringfügige Verschlechterung, zum Beispiel für die Zusammensetzung 3 von YI = 26 (Spritzguss bei 260°/80°C) auf YI = 32 und in einem anderen Beispiel für die Zusammensetzung 6 entsprechend einen Anstieg von YI = 22 auf YI = 24.

Lediglich die Polycarbonat-Zusammensetzungen 37 und 38 (Tabelle 5), die als schlagzähmodifizierende Komponente ausschließlich reine Masse-Pfropfpolymerisate enthalten, zeigen sowohl bei 260°C als auch bei 300°C sehr helle Eigenfarbe (8 > Yellowness Index > 4) bei gleichzeitig hervorragenden Hydrolysebeständigkeiten, die sich durch MVR-Anstieg von 6 bis 10% auszeichnen. Jedoch zeigen diese Zusammensetzungen eine schlechtere Schmelze- bzw. Verarbeitungsstabilität, die in mehreren Fällen durch diejenige der erfindungsgemäßen Zusammensetzungen deutlich übertroffen wird.

Die Zusammensetzungen 1 und 4 zeigen, dass die Aufarbeitung der Emulsionspfropfpolymerisate der Komponente B entweder unter saueren Bedingungen (pH < 7) stattfinden muss oder bei der Herstellung der Polycarbonat-Formmassen durch Schmelzecompoundierung säurehaltige Additive verwendet werden müssen. So zeigen die Zusammensetzungen 2 und 4 bei Spritzguss bei 260°C zwar eine gute Eigenfarbe mit Yellowness Indices <30. Diese Zusammensetzungen verbräunen sich deutlich bei höheren Temperaturen, sodass YI von über 60 bei Spritzguss bei 300°C

festgestellt werden. Auch die Hydrolysebeständigkeit und Schmelzestabilität der Zusammensetzungen 2 und 4 sind signifikant schlechter als für die erfindungsgemäßen Zusammensetzungen, bei denen saure Aufarbeitung der Pfropfemulsion oder sauere Additivierung der Formmassen stattfand.

Verwendet man bei der Aufarbeitung der ABS-Emulsionen gemäß Komponente B MagnesiumSalze, so binden diese Magnesiumsalze die carboxylat-haltigen Emulgatoren: In den Beispielen dieser Anmeldeschrift wurde Kaliumstearat als Emulgator verwendet, sodass Magnesiumstearat während der Fällung gebildet wurde. Magnesiumsalze von gesättigten Fettsäuren werden auf der anderen Seite oft als Gleitadditive bei der Kunststoffverarbeitung verwendet. In den Vergleichszusammensetzungen 22 und 23 wurden 0.4 Gew.-Tle Magnesiumstearat bei der Schmelzecompoundierung eingesetzt, die einer Menge an Magnesiumstearat entsprechen, die bei der Koagulation der Pfropfemulsionen aus Beispielen B(1) bis B(15) entsteht. In der Zusammensetzung 23 wurde zusätzlich eine Säure eingesetzt, die die basischen Anteile neutralisieren sollte. Die Ergebnisse zeigen, dass die Zusammensetzung 22 sich von allen erfindungsgemäßen Zusammensetzungen 2, 3, 5 bis 17 sowohl durch einen schlechteren Rohton, als auch durch eine außerordentlich schlechte Hydrolysebeständigkeit sowie Schmelze- bzw. Verarbeitungsstabilität unterscheidet. Bei der Vergleichszusammensetzung 23 zeigt sich die neutralisierende Wirkung der eingesetzten Säure - die Eigenfarbe dieser Zusammensetzung wird nicht negativ beeinträchtigt und bleibt bei Spritzguss bei sowohl 260°C als auch bei 300°C mit einem $28 \leq YI \leq 30$ sehr hell. Die Hydrolysebeständigkeit und Schmelze- bzw. Verarbeitungsstabilität sind jedoch sehr schlecht. Daraus wird der Unterschied erkennbar, dass die erfindungsgemäßen Zusammensetzungen, die auf gesättigten Fettsäuren basierende Emulgatoren enthalten, sowohl eine gute Eigenfarbe, als auch eine gute Hydrolysebeständigkeit sowie Schmelze- bzw. Verarbeitungsstabilität aufweisen, während die Zusammensetzungen, in denen Magnesiumsalze der gesättigten Fettsäuren als Additiv verwendet wurden eine außerordentlich schlechte Hydrolyse- sowie Schmelzebzw. Verarbeitungsstabilität und in einigen Fällen schlechte Eigenfarbe zeigen.

In der Tabelle 6 sind die Eigenschaften der PC/ABS-Zusammensetzungen zusammengefasst, die Flammschutzadditive enthalten. In den Beispielzusammensetzungen wurde neben einem Masse-ABS F.6 nur eine Teilmenge an Emulsionspfropfpolymerisat als Komponente B verwendet. Das Flammschutzadditiv D.1 enthält Säure-Gruppen (Säurezahl von 0,06 mg/g Substanz), sodass eine zusätzliche sauere Additivierung überflüssig ist. Auch diese Beispiele zeigen, dass die erfindungsgemäßen Zusammensetzungen 39 bis 42 eine gute Eigenfarbe haben, bei gleichzeitig guter Hydrolysebeständigkeit und hervorragender Schmelze- bzw. Verarbeitungsstabilität. Die Vergleichszusammensetzung 43, die in der Komponente B einen Harzsäure-Emulgator enthält, zeigt bei 300°C mit Yellowness Index von 31 einen, für einen geringen Anteil an Emulsionspfropfpolymerisat signifikant schlechteren Rohton. Der Vergleichszusammensetzung 44 wurde Magnesiumstearat mit dem Ergebnis zugesetzt, dass sich die Eigenfarbe zwar verbessert, die Hydrolysebeständigkeit aber deutlich verschlechtert wurde. Die Schmelze- und Verarbeitungsstabilität blieb auf einem exzellenten Niveau.

Alle diese Beispiele zeigen, dass die dieser Erfindung zugrunde gelegte Aufgabe, neue Polycarbonat- -Formmassen enthaltend mindestens ein Emulsions-Pfropfpolymerisat als Schlagzähmodifikator bereitzustellen, welche sich durch eine Kombination aus einem hellen Rohton, einer hohen Hydrolysebeständigkeit und einer hervorragenden Verarbeitungsstabilität auszeichnen, und zusätzlich die Bedingung erfüllen, dass diese schlagzähmodifizierten Polycarbonat-Formmassen ein Emulsions-Pfropfpolymerisat enthalten, welches in einem effizienten und für die Umwelt vorteilhaften Herstellverfahren hergestellt wird, gelöst wurde.

Tabelle 4 Eigenschaften der PC/ABS-Zusammensetzungen gemäß Tabelle 1

| | ABS | Emulgator | Menge an Emulgator | Fälllösung | Waschen | Zitronensäure | Magnesiumstearat | ΔMVR (hydr.) | ΔMVR (proc.) | Yellowness Index | |
|---|---|---|---|---|---|---|---|---|---|---|---|
| | | | [ppw] | | | | | [%] | [%] | 260°C | 300°C |
| **1 (Vgl.)** | B(1) | Kaliumstearat | 2,0 | $MgSO_4/H_2O$ | nein | | | 238 | 350 | 29 | 71 |
| **2** | B(1) | Kaliumstearat | 2,0 | $MgSO_4/H_2O$ | nein | ja | | 186 | 105 | 28 | - |
| **3** | B(2) | Kaliumstearat | 2,0 | $MgSO_4/CH_3COOH/H_2O$ | nein | | | 255 | 94 | 26 | 32 |
| **4 (Vgl.)** | B(3) | Kaliumstearat | 2,0 | $MgSO_4/H_2O$ | nein | | | n.d.1) | n.d.1) | 25 | 65 |
| **5** | B(3) | Kaliumstearat | 2,0 | $MgSO_4/H_2O$ | nein | ja | | 205 | 45 | 20 | - |
| **6** | B(4) | Kaliumstearat | 2,0 | $MgSO_4/CH_3COOH/H_2O$ | nein | | | 140 | 10 | 22 | 24 |
| **7** | B(5) | Kaliumstearat | 1,0 | $MgSO_4/CH_3COOH/H_2O$ | sorgfältig | ja | | 147 | 24 | 27 | - |
| **8** | B(6) | Kaliumstearat | 2,0 | $MgSO_4/CH_3COOH/H_2O$ | sorgfältig | ja | | 211 | 44 | 16 | - |
| **9** | B(7) | Kaliumstearat | 3,0 | $MgSO_4/CH_3COOH/H_2O$ | sorgfältig | ja | | 259 | 29 | 18 | - |
| **10** | B(8) | Kaliumstearat | 2,0 | $MgSO_4/H_2O$ | einmal | ja | | 187 | 127 | 23 | - |
| **11** | B(9) | Kaliumstearat | 2,0 | $MgSO_4/CH_3COOH/H_2O$ | einmal | ja | | 233 | 158 | 29 | - |
| **12** | B(10) | Kaliumstearat | 2,0 | $MgSO_4/H_2O$ | sorgfältig | ja | | 183 | 113 | 23 | - |
| **13** | B(11) | Kaliumstearat | 2,0 | $MgSO_4/CH_3COOH/H_2O$ | sorgfältig | ja | | 205 | 105 | 28 | - |
| **14** | B(12) | Kaliumstearat | 2,0 | $MgSO_4/H_2O$ | einmal | ja | | 198 | 53 | 19 | - |
| **15** | B(13) | Kaliumstearat | 2,0 | $MgSO_4/CH_3COOH/H_2O$ | einmal | ja | | 181 | 15 | 23 | - |
| **16** | B(14) | Kaliumstearat | 2,0 | $MgSO_4/H_2O$ | sorgfältig | ja | | 220 | 55 | 18 | - |
| **17** | B(15) | Kaliumstearat | 2,0 | $MgSO_4/CH_3COOH/H_2O$ | sorgfältig | ja | | 200 | 25 | 24 | - |
| **18 (Vgl.)** | B(16) | kein | | $MgSO_4/CH_3COOH/H_2O$ | sorgfältig | ja | | 63 | 64 | 33 | 37 |
| **19 (Vgl.)** | B(17) | Na-Dresinate 731 | 1,0 | $MgSO_4/CH_3COOH/H_2O$ | nicht | ja | | 80 | 132 | 32 | 35 |
| **20 (Vgl.)** | B(18) | Na-Dresinate 731 | 1,0 | $MgSO_4/CH_3COOH/H_2O$ | nicht | ja | | 91 | 51 | 32 | - |
| **21 (Vgl.)** | B(19) | Na-Dresinate 731 | 2,0 | $MgSO_4/CH_3COOH/H_2O$ | nicht | ja | | 132 | 74 | 34 | 38 |
| **22 (Vgl.)** | B(19) | Na-Dresinate 731 | 2,0 | $MgSO_4/CH_3COOH/H_2O$ | nicht | | ja | n.d.1) | n.d.1) | 44 | 87 |
| **23 (Vgl.)** | B(19) | Na-Dresinate 731 | 2,0 | $MgSO_4/CH_3COOH/H_2O$ | nicht | ja | ja | 470 | 300 | 28 | 30 |
| **24 (Vgl.)** | B(20) | Na-Dodecylsulfat | 2,0 | $MgSO_4/H_2O$ | nicht | ja | | 186 | 64 | 51 | - |

(fortgesetzt)

| | ABS | Emulgator | Menge an Emulgator | Fälllösung | Waschen | Zitronensäure | Magnesiumstearat | ΔMVR (hydr.) | ΔMVR (proc.) | Yellowness Index | |
|---|---|---|---|---|---|---|---|---|---|---|---|
| | | | [ppw] | | | | | [%] | [%] | 260°C | 300°C |
| **25 (Vgl.)** | B(21) | Na-Dodecylsulfat | 2,0 | $MgSO_4/CH_3COOH/H_2O$ | nicht | ja | | 166 | 80 | 48 | - |
| **26 (Vgl.)** | B(22) | Na-Dodecylsulfat | 2,0 | $MgSO_4/H_2O$ | einmal | ja | | 173 | 64 | 52 | - |
| **27 (Vgl.)** | B(23) | Na-Dodecylsulfat | 2,0 | $MgSO_4/CH_3COOH/H_2O$ | einmal | ja | | 243 | 73 | 55 | - |
| **28 (Vgl.)** | B(24) | Na-Dodecylsulfat | 2,0 | $MgSO_4/H_2O$ | sorgfältig | ja | | 50 | 50 | 46 | - |
| **29 (Vgl.)** | B(25) | Na-Dodecylsulfat | 2,0 | $MgSO_4/CH_3COOH/H_2O$ | sorgfältig | ja | | 87 | 52 | 44 | - |
| **30 (Vgl.)** | B(26) | Na-Dodecylsulfat | 1,5 | $MgSO_4/CH_3COOH/H_2O$ | sorgfältig | ja | | 83 | 45 | 50 | - |
| **31 (Vgl.)** | B(27) | Dowfax 2A1 | 1,5 | $MgSO_4/CH_3COOH/H_2O$ | sorgfältig | ja | | 140 | 71 | 55 | - |
| **32 (Vgl.)** | B(28) | Dowfax 2A1 | 2,0 | $MgSO_4/CH_3COOH/H_2O$ | sorgfältig | ja | | 208 | 65 | 56 | - |
| **33 (Vgl.)** | B(29) | Dowfax 3B2 | 1,0 | $MgSO_4/CH_3COOH/H_2O$ | sorgfältig | ja | | 110 | 90 | 39 | - |
| **34 (Vgl.)** | B(29) | Dowfax 3B2 | 1,0 | $MgSO_4/CH_3COOH/H_2O$ | sorgfältig | | | 65 | 57 | 32 | - |
| **35 (Vgl.)** | B(30) | Na-Dodecylsulfat | 1,0 | $MgSO_4/CH_3COOH/H_2O$ | sorgfältig | ja | | 90 | 62 | 43 | - |
| **36 (Vgl.)** | B(30) | Na-Dodecylsulfat | 1,0 | $MgSO_4/CH_3COOH/H_2O$ | sorgfältig | | | 70 | 58 | 37 | - |

[1)] nicht bestimmbar, da der Polycarbonatabbau bereits während der thermischen Belastung bei Compoundierung eintritt und zu deutlich zu niedrigen Schmelzeviskositäten der Ausgangsprodukte führt.

Tabelle 5 Eigenschaften der PC/ABS-Zusammensetzungen gemäß Tabelle 2

| Zusammensetzung | ABS | Emulgator | ΔMVR (hydr.) | ΔMVR (proc.) | Yellowness Index | |
|---|---|---|---|---|---|---|
| | Masse-ABS | | [%] | [%] | 260°C | 300°C |
| **37 (Vgl.)** | F.6 | kein | 6 | 115 | 4 | 8 |
| **38 (Vgl.)** | F.7 | kein | 10 | 141 | 5 | 8 |

Tabelle 6 Eigenschaften der flammgeschützten PC/ABS-Zusammensetzung gemäß Tabelle 3

| | ABS | Emulgator | Menge an Emulgator | Fällösung | Waschen | Säure (aus Flammschutzmittel) | Magnesiumstearat | ΔMVR (hydr.) | ΔMVR (proc.) | Yellowness Index | |
|---|---|---|---|---|---|---|---|---|---|---|---|
| | | | [ppw] | | | | | [%] | [%] | 260°C | 300°C |
| **39** | B(1) | Kaliumstearat | 2,0 | $MgSO_4/H_2O$ | nein | ja | | 119 | 15 | 22 | 22 |
| **40** | B(2) | Kaliumstearat | 2,0 | $MgSO_4/CH_3COOH/H_2$ | nein | ja | | 190 | 25 | 25 | 25 |
| **41** | B(3) | Kaliumstearat | 2,0 | $MgSO_4/H_2O$ | nein | ja | | 120 | 19 | 22 | 20 |
| **42** | B(4) | Kaliumstearat | 2,0 | $MgSO_4/CH_3COOH/H_2$ | nein | ja | | 110 | 9 | 25 | 26 |
| **43 (Vgl.)** | B(19) | Na-Dresinate 731 | 2,0 | $MgSO_4/CH_3COOH/H_2$ O | nein | ja | | 142 | 12 | 25 | 31 |
| **44 (Vgl.)** | B(19) | Na-Dresinate 731 | 2,0 | $MgSO_4/CH_3COOH/H_2$ O | nein | ja | ja | 215 | 0 | 23 | 25 |

## Patentansprüche

1. Zusammensetzungen enthaltend

   A) 10 bis 99 Gew.-Teile, jeweils bezogen auf die Summe der Komponenten A+B+C, aromatisches Polycarbonat und/oder aromatisches Polyestercarbonat,
   B) 1 bis 35 Gew.-Teile, jeweils bezogen auf die Summe der Komponenten A+B+C, kautschukmodifiziertes Pfropfpolymerisat von

      B.1 5 bis 95 Gew.-% wenigstens eines Vinylmonomeren auf
      B.2 95 bis 5 Gew.-% einer oder mehrerer Pfropfgrundlagen mit einer Glasübergangstemperatur < 10°C,

   C) 0 bis 40 Gew.-Teile, jeweils bezogen auf die Summe der Komponenten A+B+C, harzartiges, thermoplastisches und kautschukfreies Vinyl(Co)Polymerisat und/oder Polyalkylenterephthalat,
   D) 0 bis 50 Gew.-Teile, jeweils bezogen auf die Summe der Komponenten A+B+C, phosphorhaltiges Flammschutzmittel,
   E) 0 bis 1,0 Gew.-Teile, jeweils bezogen auf die Summe der Komponenten A+B+C, saure Additive und
   F) 0 bis 50 Gew.-Teile, jeweils bezogen auf die Summe der Komponenten A+B+C, Zusatzstoffe,

   wobei Komponente B erhältlich ist durch Reaktion der Komponente B.1 mit der Pfropfgrundlage B.2 mittels Emulsionspolymerisation mit der Maßgabe, dass bei Zusammensetzungen, die frei sind von den Komponenten D) und E), die Pfropfpolymerisat-Dispersion bei der Fällung einen pH-Wert von kleiner als 7 aufweist,
   **dadurch gekennzeichnet, dass** in der Pfropfreaktion 0,1 bis 5 Gew.-Teile (bezogen auf die Summe der Gewichtsteile der eingesetzten Monomere B.1 und der Pfropfgrundlage B.2 = 100 Gew.-Tle.) mindestens eines Emulgators ausgewählt aus der Gruppe der Alkalimetallsalze der Caprinsäure ($C_9H_{19}COOH$), Laurinsäure ($C_{11}H_{23}COOH$), Myristinsäure ($C_{13}H_{27}COOH$), Palmitinsäure ($C_{15}H_{31}COOH$), Margarinsäure ($C_{16}H_{33}COOH$), Stearinsäure ($C_{17}H_{35}COOH$), Arachinsäure ($C_{19}H_{39}COOH$), Behensäure ($C_{21}H_{43}COOH$), Lignocerinsäure ($C_{23}H_{47}COOH$) oder Cerotinsäure ($C_{25}H_{51}COOH$) eingesetzt wird, und das Pfropfpolymerisat aus der Dispersion durch Zugabe von Magnesiumsulfat gefällt wird,
   wobei der Emulgator bzw. die Emulgatoren sowie Magnesiumsulfat in der Komponente B verbleiben.

2. Zusammensetzung gemäß Anspruch 1 **dadurch gekennzeichnet, dass** in der Pfropfreaktion 0,3 bis 2,5 Gew.-Teile (bezogen auf die Summe der Gewichtsteile der eingesetzten Monomere B.1 und der Pfropfgrundlage B.2 = 100 Gew.-Tle.) des Emulgators eingesetzt wird.

3. Zusammensetzung gemäß Anspruch 1 **dadurch gekennzeichnet, dass** in der Pfropfreaktion 1,5 bis 2,5 Gew.-Teile (bezogen auf die Summe der Gewichtsteile der eingesetzten Monomere B.1 und der Pfropfgrundlage B.2 = 100 Gew.-Tle.) des Emulgators eingesetzt wird.

4. Verfahren zur Herstellung von schlagzähmodifizierten Polycarbonat-Formmassen mit verbessertem Rohton unter Beibehaltung der guten Hydrolysebeständigkeit und Verarbeitungsstabilität der schlagzähmodifizierten Polycarbonat-Formmassen, wobei die Bestandteile

   A) 10 bis 99 Gew.-Teile aromatisches Polycarbonat und/oder aromatisches Polyestercarbonat,
   B) 1 bis 35 Gew.-Teile kautschukmodifiziertes Pfropfpolymerisat von B.1 5 bis 95 Gew.-%, wenigstens eines Vinylmonomeren auf B.2 95 bis 5 Gew.-% einer oder mehrerer Pfropfgrundlagen mit einer Glasübergangstemperatur < 10°C,
   C) 0 bis 40 Gew.-Teile harzartiges, thermoplastisches und kautschukfreies Vinyl(Co)Polymerisat und/oder Polyalkylenterephthalat,
   D) 0 bis 50 Gew.-Teile, jeweils bezogen auf die Summe der Komponenten A+B+C, phosphorhaltiges Flammschutzmittel,
   E) 0 bis 1,0 Gew.-Teile, jeweils bezogen auf die Summe der Komponenten A+B +C, saure Additive und
   F) 0 bis 50 Gew.-Teile, jeweils bezogen auf die Summe der Komponenten A+B +C, Zusatzstoffe,

   in bekannter Weise vermischt (sukzessive als auch simultan erfolgen, und zwar sowohl bei etwa 20°C (Raumtemperatur) als auch bei höherer Temperatur) und bei Temperaturen von 260°C bis 300°C in üblichen Aggregaten wie Innenknetern, Extrudern und Doppelwellenschnecken schmelzcompoundiert und schmelzextrudiert werden,
   **dadurch gekennzeichnet, dass** als Schlagzähmodifikator kautschukmodifiziertes Pfropfpolymerisat (Komponente

B) eingesetzt wird, welches durch Reaktion der Komponente B.1 mit der Pfropfgrundlage B.2 mittels Emulsionspolymerisation hergestellt wird, wobei

(i) im ersten Schritt die Kautschukgrundlage B.2 mittels radikalischer EmulsionsPolymerisation direkt als wässrige Dispersion hergestellt oder im Wasser dispergiert wird,
(ii) im zweiten Schritt die Reaktion der Komponente B.1 mit der Pfropfgrundlage B.2 (nachfolgend als "Pfropfreaktion" bezeichnet) mittels Emulsionspolymerisation erfolgt, wobei

1) die Komponente B.2 in Wasser dispergiert,
2) 0,1 bis 5 Gew.-Teile (bezogen auf die Summe der Gewichtsteile der bei der Herstellung des Pfropfpolymerisats B eingesetzten Monomere B.1 und der Pfropfgrundlage B.2 = 100 Gew.-Tle) mindestens eines Emulgators ausgewählt aus der Gruppe der Alkalimetallsalze der Caprinsäure ($C_9H_{19}COOH$), Laurinsäure ($C_{11}H_{23}COOH$), Myristinsäure ($C_{13}H_{27}COOH$), Palmitinsäure ($C_{15}H_{31}COOH$), Margarinsäure ($C_{16}H_{33}COOH$), Stearinsäure ($C_{17}H_{35}COOH$), Arachinsäure ($C_{19}H_{39}COOH$), Behensäure ($C_{21}H_{43}COOH$), Lignocerinsäure ($C_{23}H_{47}COOH$) oder Cerotinsäure ($C_{25}H_{51}COOH$) eingesetzt wird,
sowie die Monomere gemäß Komponente B.1 und Radikalbildner, sowie gegebenenfalls Molekulargewichtsregler der aus Schritt (1) resultierenden Kautschukgrundlagen-Dispersion zugesetzt werden,
3) die Aufarbeitung mittels eines Verfahrens bestehend aus den Schritten

3.1) Fällung mit Magnesiumsulfat und
3.2) Abtrennung des Dispersionswassers erfolgt,

**mit der Maßgabe, dass** bei Zusammensetzungen, die frei sind von den Komponenten D) und E), die Pfropfpolymerisat-Dispersion bei der Fällung (3. 1) einen pH-Wert von kleiner als 7 aufweist,

**dadurch gekennzeichnet, dass** das resultierende wasserfeuchte Pfropfpolymerisat nicht mit zusätzlichem Wasser gewaschen wird, wobei der Emulgator bzw. die Emulgatoren sowie Magnesiumsulfat in der Komponente B verbleiben.

**5.** Verfahren gemäß Anspruch 4 **dadurch gekennzeichnet, dass** in der Pfropfreaktion 0,2 bis 2,5 Gew.-Teile (bezogen auf die Summe der Gewichtsteile der eingesetzten Monomere B.1 und der Pfropfgrundlage B.2 = 100 Gew.-Tle.) des Emulgators eingesetzt wird.

**6.** Verfahren gemäß Anspruch 4 **dadurch gekennzeichnet, dass** in der Pfropfreaktion 1,5 bis 2,5 Gew.-Teile (bezogen auf die Summe der Gewichtsteile der eingesetzten Monomere B.1 und der Pfropfgrundlage B.2 = 100 Gew.-Tle.) des Emulgators eingesetzt wird.

**7.** Formteile und/oder Halbzeuge erhältlich nach dem Verfahren gemäß einem der Ansprüche 4-6.

**8.** Verwendung der Zusammensetzungen gemäß einem der Ansprüche 1 bis 3 zur Herstellung von Formteilen oder Halbzeugen.

**9.** Formkörper enthaltend eine Zusammensetzung gemäß einem der Ansprüche 1 bis 3 oder Formteile und/oder Halbzeuge gemäß Anspruch 7.

## Claims

**1.** Compositions comprising

A) from 10 to 99 parts by weight, in each case based on the entirety of components A+B+C, of aromatic polycarbonate and/or aromatic polyester carbonate,
B) from 1 to 35 parts by weight, in each case based on the entirety of components A+B+C, of rubber-modified graft polymer of B.1 from 5 to 95 wt.% of at least one vinyl monomer on B.2 from 95 to 5 wt.% of one or more graft bases having a glass transition temperature < 10°C,
C) from 0 to 40 parts by weight, in each case based on the entirety of components A+B+C, of resinous, thermoplastic and rubber-free vinyl (co)polymer and/or polyalkylene terephthalate,
D) from 0 to 50 parts by weight, in each case based on the entirety of components A+B+C, of phosphorus-containing flame retardant,
E) from 0 to 1.0 part by weight, in each case based on the entirety of components A+B+C, of acidic additives and
F) from 0 to 50 parts by weight, in each case based on the entirety of components A+B+C, of additional substances,

wherein component B is obtainable by reacting component B.1 with the graft base B.2 by means of emulsion polymerisation, **with the proviso that,** in the case of compositions that are free of components D) and E), the pH of the graft polymer dispersion during the precipitation step is less than 7,
**characterised in that** the graft reaction uses from 0.1 to 5 parts by weight (based on the entirety of the parts by weight of the monomers B.1 used and of the graft base B.2 = 100 parts by weight) of at least one emulsifier selected from the group of the alkali metal salts of capric acid ($C_9H_{19}COOH$), lauric acid ($C_{11}H_{23}COOH$), myristic acid ($C_{13}H_{27}COOH$), palmitic acid ($C_{15}H_{31}COOH$), margaric acid ($C_{16}H_{33}COOH$), stearic acid ($C_{17}H_{35}COOH$), arachic acid ($C_{19}H_{39}COOH$), behenic acid ($C_{21}H_{43}COOH$), lignoceric acid ($C_{23}H_{47}COOH$) or cerotic acid ($C_{25}H_{51}COOH$), and the graft polymer is precipitated from the dispersion by addition of magnesium sulphate, where the emulsifier or emulsifiers and magnesium sulphate remain in component B.

**2.** Composition according to claim 1, **characterised in that** the graft reaction uses from 0.3 to 2.5 parts by weight (based on the entirety of the parts by weight of the monomers B.1 used and of the graft base B.2 = 100 parts by weight) of the emulsifier.

**3.** Composition according to claim 1, **characterised in that** the graft reaction uses from 1.5 to 2.5 parts by weight (based on the entirety of the parts by weight of the monomers B.1 used and of the graft base B.2 = 100 parts by weight) of the emulsifier.

**4.** Process for the preparation of impact-modified polycarbonate moulding compositions which have an improved natural colour while the good hydrolytic stability and processing stability of the impact-modified polycarbonate moulding compositions are retained, where the constituents

A) from 10 to 99 parts by weight of aromatic polycarbonate and/or aromatic polyester carbonate,
B) from 1 to 35 parts by weight of rubber-modified graft polymer of

B.1 from 5 to 95 wt.% of at least one vinyl monomer on
B.2 from 95 to 5 wt.% of one or more graft bases having a glass transition temperature < 10°C,

C) from 0 to 40 parts by weight of resinous, thermoplastic and rubber-free vinyl (co)polymer and/or polyalkylene terephthalate,
D) from 0 to 50 parts by weight, in each case based on the entirety of components A+B+C, of phosphorus-containing flame retardant,
E) from 0 to 1.0 part by weight, in each case based on the entirety of components A+B+C, of acidic additives, and
F) from 0 to 50 parts by weight, in each case based on the entirety of components A+B+C, of additional substances,

are mixed in a known manner (either in succession or simultaneously, either at about 20°C (room temperature) or at a higher temperature) and, at temperatures of from 260°C to 300°C in conventional assemblies such as internal mixers, extruders and twin-screw systems, are compounded in the melt and are extruded in the melt,
**characterised in that** impact modifier used comprises rubber-modified graft polymer (component B) which is prepared by reacting component B.1 with the graft base B.2 by means of emulsion polymerisation, where

(i) in the first step, the rubber base B.2 is prepared directly in the form of an aqueous dispersion by means of free-radical emulsion polymerisation or is dispersed in the water,
(ii) in the second step, the reaction of component B.1 with the graft base B.2 (referred to hereinbelow as "graft reaction") is carried out by means of emulsion polymerisation, where

1) component B.2 dispersed in water,
2) from 0.1 to 5 parts by weight (based on the entirety of the parts by weight of the monomers B.1 used in the preparation of the graft polymer B and of the graft base B.2 = 100 parts by weight) of at least one emulsifier selected from the group of the alkali metal salts of capric acid ($C_9H_{19}COOH$), lauric acid ($C_{11}H_{23}COOH$), myristic acid ($C_{13}H_{27}COOH$), palmitic acid ($C_{15}H_{31}COOH$), margaric acid ($C_{16}H_{33}COOH$),

stearic acid ($C_{17}H_{35}COOH$), arachic acid ($C_{19}H_{39}COOH$), behenic acid ($C_{21}H_{43}COOH$), lignoceric acid ($C_{23}H_{47}COOH$) or cerotic acid ($C_{25}H_{51}COOH$) are used, and the monomers according to component B.1 and free-radical generators and optionally molecular weight regulators are added to the rubber base dispersion obtained in step (1),
3) work-up is carried out by means of a process comprising the steps

3.1) precipitation with magnesium sulphate and
3.2) separation of the dispersing water,

**with the proviso that,** in the case of compositions that are free of components D) and E), the pH of the graft polymer dispersion during the precipitation step (3.1) is less than 7,

**characterised in that** the resulting moist graft polymer is not washed with additional water, where the emulsifier or emulsifiers and magnesium sulphate remain in component B.

**5.** Process according to claim 4, **characterised in that** the graft reaction uses from 0.2 to 2.5 parts by weight (based on the entirety of the parts by weight of the monomers B.1 used and of the graft base B.2 = 100 parts by weight) of the emulsifier.

**6.** Process according to claim 4, **characterised in that** the graft reaction uses from 1.5 to 2.5 parts by weight (based on the entirety of the parts by weight of the monomers B.1 used and of the graft base B.2 = 100 parts by weight) of the emulsifier.

**7.** Mouldings and/or semi-finished products obtainable by the process according to any one of claims 4 to 6.

**8.** Use of the compositions according to any one of claims 1 to 3 for the production of mouldings or semi-finished products.

**9.** Moulded body comprising a composition according to any one of claims 1 to 3 or mouldings and/or semi-finished products according to claim 7.

## Revendications

**1.** Compositions contenant

A) 10 à 99 parties en poids, chaque fois par rapport à la somme des composants A+B+C, de polycarbonate aromatique et/ou polyestercarbonate aromatique,
B) 1 à 35 parties en poids, chaque fois par rapport à la somme des composants A+B+C, de polymérisat greffé, modifié avec du caoutchouc, de

B.1 5 à 95 % en poids d'au moins un monomère vinylique sur
B.2 95 à 5 % en poids d'une ou de plusieurs bases de greffage ayant une température de transition vitreuse < 10 °C,

C) 0 à 40 parties en poids, chaque fois par rapport à la somme des composants A+B+C, de (co)polymérisat vinylique et/ou poly(alkylène-téréphtalate), de type résine, thermoplastique et exempt de caoutchouc,
D) 0 à 50 parties en poids, chaque fois par rapport à la somme des composants A+B+C, d'agent ignifuge phosphoré,
E) 0 à 1,0 partie en poids, chaque fois par rapport à la somme des composants A+B+C, d'additifs acides et
F) 0 à 50 parties en poids, chaque fois par rapport à la somme des composants A+B+C, d'additifs,

le composant B pouvant être obtenu par réaction du composant B.1 avec la base de greffage B.2 par polymérisation en émulsion, **étant entendu que** pour les compositions qui sont exemptes des composants D) et E) la dispersion de polymérisat greffé présente lors de la précipitation un pH inférieur à 7.
**caractérisées en ce que** dans la réaction de greffage on utilise 0,1 à 5 parties en poids (par rapport à la somme des parties en poids des monomères B.1 utilisés et de la base de greffage B.2 = 100 parties en poids) d'au moins un émulsifiant choisi dans le groupe des sels de métaux alcalins de l'acide caprique ($C_9H_{19}COOH$), l'acide laurique

($C_{11}H_{23}COOH$), l'acide myristique ($C_{13}H_{27}COOH$), l'acide palmitique ($C_{15}H_{31}COOH$), l'acide margarique ($C_{16}H_{33}COOH$), l'acide stéarique ($C_{17}H_{35}COOH$), l'acide arachidique ($C_{19}H_{39}COOH$), l'acide béhénique ($C_{21}H_{43}COOH$), l'acide lignocérique ($C_{23}H_{47}COOH$) ou l'acide cérotique ($C_{25}H_{51}COOH$), et on fait précipiter le polymérisat greffé à partir de la dispersion par addition de sulfate de magnésium,
l'émulsifiant ou les émulsifiants ainsi que le sulfate de magnésium restent dans le composant B.

**2.** Composition selon la revendication 1, **caractérisée en ce que** dans la réaction de greffage on utilise 0,3 à 2,5 parties en poids (par rapport à la somme des parties en poids des monomères B.1 utilisés et de la base de greffage B.2 = 100 parties en poids) de l'émulsifiant.

**3.** Composition selon la revendication 1, caractérisée en ce dans la réaction de greffage on utilise 1,5 à 2,5 parties en poids (par rapport à la somme des parties en poids des monomères B.1 utilisés et de la base de greffage B.2 = 100 parties en poids) de l'émulsifiant.

**4.** Procédé pour la production de matières à mouler polycarbonate à modification antichoc, à nuance propre améliorée, avec maintien de la bonne résistance à l'hydrolyse et bonne stabilité lors de la mise en oeuvre des matières à mouler polycarbonate à modification antichoc, dans lequel on mélange d'une façon connue (successivement ou bien simultanément, à savoir aussi bien à environ 20 °C (température ambiante) qu'à une température plus élevée) les composants

A) 10 à 99 parties en poids de polycarbonate aromatique et/ou polyestercarbonate aromatique,
B) 1 à 35 parties en poids de polymérisat greffé, modifié avec du caoutchouc, de

B.1 5 à 95 % en poids d'au moins un monomère vinylique sur
B.2 95 à 5 % en poids d'une ou de plusieurs basses de greffage ayant une température de transition vitreuse < 10 °C,

C) 0 à 40 parties en poids de (co)polymérisat vinylique et/ou poly(alkylène-téréphtalate), de type résine, thermoplastique et exempt de caoutchouc,
D) 0 à 50 parties en poids, chaque fois par rapport à la somme des composants A+B+C, d'agent ignifuge phosphoré,
E) 0 à 1,0 partie en poids, chaque fois par rapport à la somme des composants A+B+C, d'additifs acides et
F) 0 à 50 parties en poids, chaque fois par rapport à la somme des composants A+B+C, d'additifs,

et on les soumet à un compoundage à chaud et à une extrusion de masse fondue, à des températures de 260 °C à 300 °C dans les appareils usuels tels que des malaxeurs internes et des vis à double arbre,
**caractérisé en ce qu'**on utilise comme modificateur antichoc un polymérisat greffé modifié avec du caoutchouc (composant B), qui est préparé par réaction du composant B.1 avec la base de greffage B.2 par polymérisation en émulsion,

(i) dans la première étape en préparant la base de caoutchouc B.2 par polymérisation radicalaire en émulsion directement sous forme de dispersion aqueuse ou en la dispersant dans l'eau,
(ii) dans la deuxième étape en effectuant la réaction du composant B.1 avec la base de greffage B.2 (désignée ci-après par « réaction de greffage ») par polymérisation en émulsion, en

1) dispersant le composant B.2 dans de l'eau,
2) utilisant 0,1 à 5 parties en poids (par rapport à la somme des parties en poids des monomères B.1 utilisés dans la préparation du polymérisat greffé B et de la base de greffage B.2 = 100 parties en poids) d'au moins un émulsifiant choisi dans le groupe des sels de métaux alcalins de l'acide caprique ($C_9H_{19}COOH$), l'acide laurique ($C_{11}H_{23}COOH$), l'acide myristique ($C_{13}H_{27}COOH$), l'acide palmitique ($C_{15}H_{31}COOH$), l'acide margarique ($C_{16}H_{33}COOH$), l'acide stéarique ($C_{17}H_{35}COOH$), l'acide arachidique ($C_{19}H_{39}COOH$), l'acide béhénique ($C_{21}H_{43}COOH$), l'acide lignocérique ($C_{23}H_{47}COOH$) ou l'acide cérotique ($C_{25}H_{51}COOH$),
ainsi qu'en ajoutant à la dispersion de base de caoutchouc résultant de l'étape (1) les monomères selon le composant B.1 et des générateurs de radicaux, ainsi qu'éventuellement des régulateurs de masse moléculaire,
3) en effectuant le traitement final au moyen d'un procédé consistant en les étapes

3.1) précipitation à l'aide de sulfate de magnésium et

3.2) séparation de l'eau de dispersion,

**étant entendu** que dans les compositions qui sont exemptes des composants D) et E), la dispersion de polymérisat greffé présente lors de la précipitation (3.1) un pH inférieur à 7,

**caractérisé en ce qu**'on lave avec de l'eau supplémentaire le polymérisat greffé résultant, imprégné d'eau, l'émulsifiant ou les émulsifiants ainsi que le sulfate de magnésium restant dans le composant B.

**5.** Procédé selon la revendication 4, **caractérisé en ce que** dans la réaction de greffage on utilise 0,2 à 2,5 parties en poids (par rapport à la somme des parties en poids des monomères B.1 utilisés et de la base de greffage B.2 = 100 parties en poids) de l'émulsifiant.

**6.** Procédé selon la revendication 4, **caractérisé en ce que** dans la réaction de greffage on utilise 1,5 à 2,5 parties en poids (par rapport à la somme des parties en poids des monomères B.1 utilisés et de la base de greffage B.2 = 100 parties en poids) de l'émulsifiant.

**7.** Pièces moulées et/ou produits semi-finis, pouvant être obtenus conformément au procédé selon l'une quelconque des revendications 4 - 6.

**8.** Utilisation des compositions selon les revendications 1 à 3, pour la production de pièces moulées ou de produits semi-finis.

**9.** Corps moulés contenant une composition selon l'une quelconque des revendications 1 à 3 ou pièces moulées et/ou produits semi-finis selon la revendication 7.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0900827 A
- WO 9901489 A
- JP 2006169461 A
- DE 102005058847 A1
- DE AS1495626 B
- DE 2232877 A
- DE 2703376 A
- DE 2714544 A
- DE 3000610 A
- DE 3832396 A
- DE 3077934 A
- DE 2842005 A
- US 3419634 A
- DE 3334782 A
- DE 2940024 A
- DE 3007934 A
- DE OS3704657 A
- DE OS3704655 A
- DE OS3631540 A
- DE OS3631539 A
- DE 3639904 A1
- WO 9901489 A1
- DE 2407674 A
- DE 2407776 A
- DE 2715932 A
- DE 1900270 A
- US PS3692744 A
- EP 0363608 A
- EP 0640655 A
- WO 0000541 A
- WO 0118105 A
- DE 3913509 A1


### In der Beschreibung aufgeführte Nicht-Patentliteratur


- Thermal and hydrolytic stability of polycarbonate/acrylonitrile-butadiene-styrene based blends. **VON B.S. PATTY ; L. NOVAK ; H. PHAN.** Advances in Plastic Components, Processes and Technologies. Society of Automotive Engineers, 2005, 145-151
- **SCHNELL.** Chemistry and Physics of Polycarbonates. Interscience Publishers, 1964
- **M. HOFFMANN ; H. KRÖMER ; R. KUHN.** Polymeranalytik. Georg Thieme-Verlag, 1977, vol. I, II
- **W. SCHOLTAN ; H. LANGE.** *Kolloid. Z. und Z. Polymere,* 1972, vol. 250, 782-796
- Kunststoff-Handbuch. Carl-Hanser-Verlag, 1973, vol. VIII, 695 ff
- Ullmanns Enzyklopädie der technischen Chemie. 1979, vol. 18, 301 ff
- **HOUBEN-WEYL.** *Methoden der organischen Chemie,* vol. 12 (1), 43
- *METHODEN DER ORGANISCHEN CHEMIE,* vol. 6, 177